(19) Europäisches Patentamt
European Patent Office
Office européen des brevets

(11) EP 4 694 506 A1

(12) EUROPEAN PATENT APPLICATION
published in accordance with Art. 153(4) EPC

(43) Date of publication:
11.02.2026 Bulletin 2026/07

(51) International Patent Classification (IPC):
H04W 72/25 $^{(2023.01)}$

(21) Application number: 24806293.7

(52) Cooperative Patent Classification (CPC):
H04W 72/0446; H04W 72/0453; H04W 72/25;
H04W 72/542

(22) Date of filing: 22.04.2024

(86) International application number:
PCT/CN2024/089080

(87) International publication number:
WO 2024/234937 (21.11.2024 Gazette 2024/47)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 12.05.2023 CN 202310544138

(71) Applicant: Huawei Technologies Co., Ltd.
Shenzhen, Guangdong 518129 (CN)

(72) Inventors:
• YI, Feng
  Shenzhen, Guangdong 518129 (CN)
• ZHANG, Yi
  Shenzhen, Guangdong 518129 (CN)
• SU, Hongjia
  Shenzhen, Guangdong 518129 (CN)

(74) Representative: Pfenning, Meinig & Partner mbB
Patent- und Rechtsanwälte
Theresienhöhe 11a
80339 München (DE)

(54) COMMUNICATION METHOD AND APPARATUS

(57) A communication method and apparatus are provided, and relate to the field of communication technologies. The method includes: A first terminal device determines a first sidelink resource. The first terminal device sends a first signal on the first sidelink resource, where the first signal is used to determine identification information of the first terminal device. The first terminal device determines a second sidelink resource based on the identification information of the first terminal device. The second sidelink resource is located in the first sidelink resource, the second sidelink resource is used to carry a second signal, the second signal is used for interference measurement, and power of the second signal is zero. This can improve accuracy of a signal measurement result.

FIG. 3

**Description**

This application claims priority to Chinese Patent Application No. 202310544138.7, filed with the China National Intellectual Property Administration on May 12, 2023, and entitled "COMMUNICATION METHOD AND APPARATUS", which is incorporated herein by reference in its entirety.

**TECHNICAL FIELD**

This application relates to the field of communication technologies, and in particular, to a communication method and apparatus.

**BACKGROUND**

In a sidelink (sidelink, SL) communication scenario, beam training may be performed between terminal devices, to ensure communication quality between different terminal devices. Usually, the terminal device may perform beam training by using a sidelink synchronization signal block (sidelink synchronization signal block, S-SSB), a channel state information reference signal (channel state information reference signal, CSI-RS), or the like. The following uses the S-SSB as an example for description.

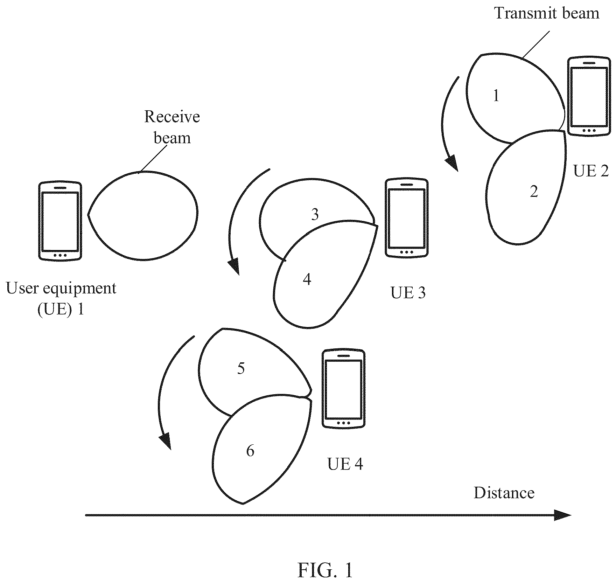

Currently, for different terminal devices, time-frequency resources used for S-SSB sending overlap. In other words, different terminal devices may simultaneously send S-SSBs by using transmit beams. Therefore, signal energy determined by one terminal device on a same time-frequency resource is a superimposed value of signal energy of a plurality of other terminal devices. For example, as shown in FIG. 1, it is assumed that user equipment (user equipment, UE) 1 needs to determine an optimal beam for UE 2. Therefore, signal energy on a time-frequency resource 1 needs to be determined by using a receive beam. However, the UE 2 may send an S-SSB on the time-frequency resource 1 by using a transmit beam 1, UE 3 may send an S-SSB on the time-frequency resource 1 by using a transmit beam 3, and UE 4 may send an S-SSB on the time-frequency resource 1 by using a transmit beam 5. Therefore, the signal energy on the time-frequency resource 1 is not signal energy only for the UE 2. In other words, this causes an inaccurate signal measurement result.

**SUMMARY**

This application provides a communication method and apparatus, to improve accuracy of a signal measurement result.

According to a first aspect, a communication method is provided. The method includes: A first terminal device determines a first sidelink resource. The first terminal device sends a first signal on the first sidelink resource, where the first signal is used to determine identification information of the first terminal device, and the first signal is further used for beam training. The first terminal device determines a second sidelink resource based on the identification information of the first terminal device. The second sidelink resource is located in the first sidelink resource, the second sidelink resource is used to carry a second signal, the second signal is used for interference measurement, and power of the second signal is zero.

In the foregoing embodiment, accuracy of a signal measurement result can be improved, and accuracy of a beam training result can be further improved. For example, at a specific moment, if only the first terminal device broadcasts an S-SSB, and no other terminal device broadcasts an S-SSB, a second terminal device may measure the S-SSB on the first sidelink resource, and an obtained first measurement result is actually a signal energy value corresponding to the first terminal device. Further, the second terminal device determines the identification information of the first terminal device based on the S-SSB, and determines the second sidelink resource based on the identification information of the first terminal device. However, the first terminal device does not send an S-SSB on the second sidelink resource. In other words, when performing resource mapping for the S-SSB on the first sidelink resource, the first terminal device skips the second sidelink resource. Therefore, for the first terminal device, the second sidelink resource may be used to carry the second signal whose power is zero. In this way, the second terminal device measures the second signal on the second sidelink resource, and an obtained second measurement result is almost 0. Therefore, the accuracy of the signal measurement result is ensured, so that a result of beam training performed by the second terminal device based on the first measurement result and the second measurement result is accurate.

Optionally, a terminal device (for example, the first terminal device) in this application may determine the first sidelink resource based on configuration information. The configuration information may be predefined or (pre)configured in the terminal device (for example, the first terminal device) in this application. For example, the configuration information is indicated by a network device to the terminal device (for example, the first terminal device) in this application by using a higher layer parameter (for example, radio resource control (radio resource control, RRC) signaling).

A resource (for example, the first sidelink resource) in this application may include a time domain resource and/or a frequency domain resource. For example, a time domain resource of the first sidelink resource may include at least one of the following: a frame, a subframe, a slot, a sub-slot, and a symbol. The symbol in this application may be an orthogonal frequency division multiplexing (orthogonal frequency division multiplexing, OFDM) symbol. For ease of description, the OFDM symbol is briefly referred to as a symbol below. For another example, a frequency domain resource of the first sidelink resource may include at least one of the following: a resource element (resource element, RE), a resource block (resource block, RB), a resource block group (resource block group, RBG), a sub-channel (sub-channel), a resource block set, a resource pool, a carrier, and a bandwidth part (bandwidth part, BWP). One carrier may include one BWP, one BWP may include one or more resource pools, one resource pool may include one or more sub-channels, and one sub-channel includes a plurality of RBs.

The following describes the first sidelink resource with reference to specific examples. Details are as follows:

1. The first sidelink resource may include a resource occupied by an S-SSB. The S-SSB may include one or more of a sidelink primary synchronization signal (sidelink primary synchronization signal, S-PSS), a sidelink secondary synchronization signal (sidelink secondary synchronization signal, S-SSS), a demodulation reference signal (demodulation reference signal, DMRS) for physical sidelink broadcast channel (physical sidelink broadcast channel, PSBCH) (DMRS for PSBCH), and a payload for PSBCH (payload for PSBCH). The payload for PSBCH may represent a PSBCH that carries a sidelink master information block (sidelink master information block, SL-MIB). In this case, the first signal may be an S-SSB. The S-SSB may be used for synchronization, and may be further used for beam training or the like.

2. The first sidelink resource includes a resource occupied by a physical sidelink shared channel (physical sidelink shared channel, PSSCH) and/or a resource occupied by a physical sidelink control channel (physical sidelink control channel, PSCCH). The PSSCH may include one or more of a CSI-RS (the CSI-RS is carried in the PSSCH), a DMRS for PSSCH (DMRS for PSSCH), second-stage sidelink control information (sidelink control information, SCI) (the second-stage SCI may also be referred to as second-order SCI), and data carried in the PSSCH. The PSCCH may include one or more of a DMRS for PSCCH (DMRS for PSCCH) and first-stage SCI (the first-stage SCI may also be referred to as first-order SCI). In this case, the first signal may be a PSSCH or a PSCCH. For example, when the first sidelink resource includes the resource occupied by the PSSCH, the first signal may be a PSSCH. For another example, when the first sidelink resource includes the resource occupied by the PSCCH, the first signal may be a PSCCH. For another example, when the first sidelink resource includes the resource occupied by the PSSCH and the resource occupied by the PSCCH, the first signal may be a PSSCH or a PSCCH. The CSI-RS carried in the PSSCH may be used for beam training. The PSCCH and the PSSCH may be located on a same sub-channel.

Optionally, the first sidelink resource may be one or more RBs in one slot, for example, one or more consecutive RBs in one slot. There may be one or more slots in the first sidelink resource. This is not limited herein.

A measurement result (for example, the first measurement result) in this application is a result obtained by measuring signal quality or signal energy based on a wireless signal (for example, an S-PSS, an S-SSS, a DMRS for PSBCH, a CSI-RS, a DMRS for PSSCH, or a DMRS for PSCCH), for example, one or more of reference signal received power (reference signal received power, RSRP), reference signal received quality (reference signal received quality, RSRQ), a received signal strength indicator (received signal strength indicator, RSSI), and a signal to interference plus noise ratio (signal to interference plus noise ratio, SINR). For meanings of the foregoing terms, reference may be made, for example, to a specification of a protocol or a standard of a communication technology used by a communication link.

Identification information of a terminal device (for example, the first terminal device) in this application is used to identify the terminal device. The following uses an identifier of the first terminal device as an example for description. Details are as follows:

1. When the first signal is an S-SSB, the identification information of the first terminal device may be a synchronization signal identifier (synchronization signal identifier, SSID) corresponding to the first terminal device. Optionally, the identification information of the first terminal device may be carried in the S-SSB, for example, an S-PSS, an S-SSS, a DMRS for PSBCH, or a payload for PSBCH.

2. When the first signal is a PSSCH or a PSCCH, the identification information of the first terminal device may be a source layer 1 identifier (source layer 1 identifier, L1 ID) or a source layer 2 identifier (source layer 2 identifier, L2 ID). Optionally, the identification information of the first terminal device may be carried in SCI. For example, the identification information of the first terminal device may be carried in first-stage SCI or second-stage SCI.

The second signal may be referred to as reference information for interference measurement (reference signal for interference management, RS-IM). A name of the second signal is not limited in this application. That the second signal is used for interference measurement may be understood as at least one of the following: The second signal is used for interference management (interference management), the second signal is used for interference coordination (interference coordination), and the like. This is not limited herein. Optionally, that the power of the second signal is zero may be understood as at least one of the following: Energy of the second signal is set to null, the terminal device does not send the second signal, the first terminal device does not carry the first signal on the second sidelink resource, the first terminal device skips the second sidelink resource when performing resource mapping for the first signal on the first sidelink resource, and the like.

With reference to the first aspect, in a possible implementation, that the first terminal device determines the second sidelink resource based on the identification information of the first terminal device includes: The first terminal device determines a first pattern (pattern), where the first pattern is used to determine a resource position of the second signal. The first terminal device determines a candidate resource set based on the first pattern and the first sidelink resource, where a candidate resource in the candidate resource set is used to carry the second signal. The first terminal device determines the second sidelink resource based on the identification information of the first terminal device and the candidate resource set.

In the foregoing embodiment, the first terminal device determines, based on the first pattern used to determine the resource position of the second signal and the first sidelink resource, the candidate resource set used to carry the second signal. This indicates that the candidate resource in the candidate resource set is located in the first sidelink resource. Therefore, a signal used for beam measurement, for example, an S-SSB or a CSI-RS, may be sent on the candidate resource. Further, the first terminal device may determine the second sidelink resource based on the identification information of the first terminal device and the candidate resource set. Different terminal devices have different identification information. Therefore, it is ensured that resources that are used to carry the second signal and that are on different terminal devices are different.

The first pattern may be predefined or (pre)configured in the terminal device (for example, the first terminal device or the second terminal device) in this application. For example, the first pattern may be (pre)configured in a resource pool or an SL BWP. For another example, the first pattern may be indicated by the network device to the terminal device (for example, the first terminal device or the second terminal device) in this application by using a higher layer parameter (for example, RRC signaling).

In a possible implementation, the first pattern may include at least one RE, one RE includes one time unit and one frequency domain unit, the time unit may be a symbol, and the frequency domain unit may be an RE, which is related to a subcarrier spacing. It may also be understood that the first pattern includes at least Q time units (for example, Q consecutive time units in one slot) in time domain, and includes at least N frequency domain units (for example, N consecutive frequency domain units in one RB) in frequency domain. Optionally, Q is a predefined or (pre)configured integer greater than or equal to 1 and less than or equal to 14. Optionally, N is a predefined or (pre)configured integer greater than or equal to 1 and less than or equal to 12. For example, Q=2, and N=2. For another example, Q=1, and N=4.

In a possible implementation, the first sidelink resource includes the resource occupied by the S-SSB, and the candidate resource in the candidate resource set overlaps the resource occupied by the S-SSB. Optionally, the candidate resource in the candidate resource set does not overlap a resource occupied by one or more of the S-PSS, the S-SSS, and the DMRS for PSBCH that are included in the S-SSB. In another possible implementation, the first sidelink resource includes the resource occupied by the PSSCH and/or the resource occupied by the PSCCH, and the candidate resource in the candidate resource set overlaps the resource occupied by the PSSCH and/or the resource occupied by the PSCCH. Optionally, when the candidate resource in the candidate resource set overlaps the resource occupied by the PSSCH, the candidate resource in the candidate resource set does not overlap a resource occupied by one or more of the CSI-RS and the DMRS for PSSCH. Optionally, when the candidate resource in the candidate resource set overlaps the resource occupied by the PSSCH, the candidate resource in the candidate resource set may alternatively not overlap the resource occupied by the DMRS for PSCCH.

In a possible implementation, candidate resources in the candidate resource set are consecutively numbered first in ascending order of indexes of frequency domain units and then in ascending order of indexes of time units. In this application, the ascending order of indexes may also be understood as an increasing order of indexes. For example, one slot includes 14 symbols, and the 14 symbols are arranged in ascending order or increasing order of indexes. Optionally, the ascending order of indexes of time units may also be understood as a sequential order of indexes of time units. For example, one slot includes 14 symbols, a symbol whose index is 0 is located before a symbol whose index is 1, and the symbol whose index is 1 is located before a symbol whose index is 2. The same applies to the rest. Optionally, the ascending order or increasing order of indexes of frequency domain units may be understood as an ascending order of frequency domain positions.

According to a second aspect, a communication method is provided. The method includes: A second terminal device determines a first sidelink resource. The second terminal device receives a first signal on the first sidelink resource, and measures the first signal to obtain a first measurement result, where the first signal is used to determine identification information of a first terminal device. The second terminal device determines a second sidelink resource based on the identification information of the first terminal device, where the second sidelink resource is located in the first sidelink resource, the second sidelink resource is used to carry a second signal, the second signal is used for interference measurement, and power of the second signal is zero. The second terminal device receives a third signal on the second sidelink resource, and measures the third signal to obtain a second measurement result, where the second signal and the third signal are a same signal or different signals. The second terminal device performs beam training based on the first measurement result and the second measurement result.

In the foregoing embodiment, accuracy of a signal measurement result can be improved, and accuracy of a beam training result can be further improved. For example, at a specific moment, if only the first terminal device broadcasts an S-SSB, and no other terminal device broadcasts an S-SSB, the second terminal device may measure the S-SSB on the first sidelink resource, and an obtained first measurement result is actually a signal energy value corresponding to the first terminal device. Further, the second terminal device determines the identification information of the first terminal device based on the S-SSB, and determines the second sidelink resource based on the identification information of the first terminal device. However, the first terminal device does not send an S-SSB on the second sidelink resource. In other words, when performing resource mapping for the S-SSB on the first sidelink resource, the first terminal device skips the second sidelink resource. Therefore, for the first terminal device, the second sidelink resource may be used to carry the second signal whose power is zero. Because the second signal and the third signal are the same signal, the second terminal device measures the third signal on the second sidelink resource, and an obtained second measurement result is almost 0. Therefore, the accuracy of the signal measurement result is ensured, so that a result of beam training performed by the second terminal device based on the first measurement result and the second measurement result is accurate. When the first terminal device broadcasts an S-SSB, and another terminal device (for example, a third terminal device) broadcasts an S-SSB, the second terminal device measures S-SSBs on the first sidelink resource, and an obtained first measurement result is actually a superimposed value of signal energy of the first terminal device and the third terminal device. Further, the second terminal device determines the identification information of the first terminal device based on the S-SSB broadcast by the first terminal device, and determines the second sidelink resource based on the identification information of the first terminal device. However, the first terminal device does not send an S-SSB on the second sidelink resource. In other words, when performing resource mapping for the S-SSB on the first sidelink resource, the first terminal device skips the second sidelink resource. Therefore, for the first terminal device, the second sidelink resource may be used to carry the second signal whose power is zero. Because the second sidelink resource is located in the first sidelink resource, that is, a resource occupied by the S-SSB includes a resource occupied by the second signal, the third terminal device may broadcast the S-SSB (that is, the third signal) on the second sidelink resource. In this case, a measurement result (that is, the second measurement result) of the second terminal device on the second sidelink resource is essentially a result obtained by measuring the SSB broadcast by the third terminal device. In this way, the accuracy of the signal measurement result can be ensured, so that a result of beam training performed by the second terminal device based on the first measurement result and the second measurement result is accurate.

Optionally, when the second signal and the third signal are different signals, the third signal is similar to the first signal. Details are not described herein. Optionally, when the first signal and the third signal are both S-SSBs, an SSID corresponding to the third signal is different from an SSID corresponding to the first signal. In other words, an S-PSS included in the third signal is different from an S-PSS included in the first signal, and/or an S-SSS included in the third signal is different from an S-SSS included in the first signal.

With reference to the second aspect, in a possible implementation, the identification information of the first terminal device is different from identification information of the second terminal device, and a resource that is used to carry the second signal and that is on the first terminal device does not overlap a resource that is used to carry the second signal and that is on the second terminal device.

In the foregoing embodiment, different terminal devices have different identification information. This ensures that resources that are used to carry the second signal and that are on different terminal devices are different.

With reference to the second aspect, in a possible implementation, that the second terminal device determines the second sidelink resource based on the identification information of the first terminal device includes: The second terminal device determines a first pattern, where the first pattern is used to determine a resource position of the second signal. The second terminal device determines a candidate resource set based on the first pattern and the first sidelink resource, where a candidate resource in the candidate resource set is used to carry the second signal. The second terminal device determines the second sidelink resource based on the identification information of the first terminal device and the candidate resource set.

In the foregoing embodiment, the second terminal device determines, based on the first pattern used to determine the resource position of the second signal and the first sidelink resource, the candidate resource set used to carry the second signal. This indicates that the candidate resource in the candidate resource set is located in the first sidelink resource. Therefore, a signal used for beam measurement, for example, an S-SSB or a CSI-RS, may be sent on the candidate resource. Further, the second terminal device may determine the second sidelink resource based on the identification information of the first terminal device and the candidate resource set. Different terminal devices have different identification information. Therefore, it is ensured that resources that are used to carry the second signal and that are on different terminal devices are different.

With reference to the second aspect, in a possible implementation, the second signal and the third signal are different signals, the first measurement result further includes a measurement result obtained by the second terminal device by measuring a fourth signal on the first sidelink resource, and that the second terminal device performs beam training based on the first measurement result and the second measurement result includes: The second terminal device determines a difference between the first measurement result and the second measurement result. The second terminal device performs beam training based on the difference between the first measurement result and the second measurement result.

In the foregoing embodiment, the second terminal device performs beam training based on the difference between the first measurement result and the second measurement result. In this way, it can be ensured that the result of beam training performed by the second terminal device based on the first measurement result and the second measurement result is accurate.

According to a third aspect, a communication apparatus is provided. The apparatus includes a unit or module configured to implement the method in any one of the implementations of the first aspect or the second aspect.

According to a fourth aspect, a communication apparatus is provided. The communication apparatus includes at least one processor and a memory. The memory is configured to store a computer program or instructions. The at least one processor is configured to execute the computer program or the instructions in the memory, to perform the method in any one of the implementations of the first aspect or the second aspect.

According to a fifth aspect, a communication system is provided. The communication system includes a first terminal device and a second terminal device. The first terminal device is configured to perform the method in any one of the implementations of the first aspect. The second terminal device is configured to perform the method in any one of the implementations of the second aspect.

According to a sixth aspect, a computer-readable storage medium is provided. The computer-readable storage medium stores computer instructions. When the computer instructions are executed, a computer is enabled to perform the method in any one of the implementations of the first aspect or the second aspect.

According to a seventh aspect, a computer program product is provided. The computer program product includes computer program code. When the computer program code is run by a computer, the computer is enabled to perform the method in any one of the implementations of the first aspect or the second aspect.

According to an eighth aspect, a chip is provided. The chip includes at least one processor and an interface. The processor is configured to read and execute instructions stored in a memory. When the instructions are run, the chip is enabled to perform the method in any one of the implementations of the first aspect or the second aspect.

## BRIEF DESCRIPTION OF DRAWINGS

The following briefly describes accompanying drawings used in describing embodiments.

FIG. 1 is a diagram of transmit beams;
FIG. 2-1 to FIG. 2-4 show basic architectures of a communication system according to an embodiment of this application;
FIG. 3 is a schematic flowchart of a communication method according to an embodiment of this application;
FIG. 4 is a diagram of resources occupied by an S-SSB;
FIG. 5 is a diagram of resources occupied by a PSSCH and a PSCCH;
FIG. 6 is a diagram of a first pattern according to an embodiment of this application;
FIG. 7-1 and FIG. 7-2 are a diagram of candidate resources according to an embodiment of this application;
FIG. 8A and FIG. 8B are another diagram of candidate resources according to an embodiment of this application;
FIG. 9A and FIG. 9B are another diagram of candidate resources according to an embodiment of this application;
FIG. 10A and FIG. 10B are another diagram of candidate resources according to an embodiment of this application;
FIG. 11A and FIG. 11B are another diagram of candidate resources according to an embodiment of this application;
FIG. 12A and FIG. 12B are another diagram of candidate resources according to an embodiment of this application;
FIG. 13 is a diagram of a second sidelink resource according to an embodiment of this application;
FIG. 14 is a diagram of a structure of a communication apparatus according to an embodiment of this application; and
FIG. 15 is a diagram of a structure of another communication apparatus according to an embodiment of this application.

## DESCRIPTION OF EMBODIMENTS

The following describes technical solutions in embodiments of this application with reference to accompanying drawings in embodiments of this application. The terms "system" and "network" may be used interchangeably in embodiments of this application. "/" represents an "or" relationship between associated objects unless otherwise specified. For example, A/B may represent A or B. The term "and/or" in this application is merely an association relationship for describing associated objects, and represents that three relationships may exist. For example, A and/or B may represent the following three cases: Only A exists, both A and B exist, and only B exists, where A and B each may be singular or plural. In addition, in descriptions of this application, unless otherwise specified, "a plurality of" means two or more than two. "At least one of the following items (pieces)" or a similar expression thereof refers to any combination of these items, including any combination of singular items (pieces) or plural items (pieces). For example, at least one of a, b, or c may indicate: a, b, c, a and b, a and c, b and c, or a, b, and c, where a, b, and c may be singular or plural. In addition, to clearly describe the technical solutions in embodiments of this application, the terms such as "first" and "second" are used in embodiments of this application to distinguish between same items or similar items that provide basically same network elements and purposes. A person skilled in the art may understand that the terms such as "first" and "second" do not limit a quantity or an execution sequence, and the terms such as "first" and "second" do not indicate a definite difference.

Reference to "an embodiment", "some embodiments", or the like described in embodiments of this application means that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean reference to a same embodiment. Instead, the statements mean "one or more but not all of embodiments", unless otherwise specifically emphasized in another manner. The terms "include", "contain", "have", and other variants thereof all mean "include but are not limited to", unless otherwise specifically emphasized in another manner.

The objectives, technical solutions, and beneficial effect of this application are further described in detail in the following specific implementations. It should be understood that the following descriptions are merely specific implementations of this application, but are not intended to limit the protection scope of this application. Any modification, equivalent replacement, improvement, or the like made based on the technical solutions of this application shall fall within the protection scope of this application.

In various embodiments of this application, unless otherwise specified or there is a logic conflict, terms and/or descriptions in different embodiments are consistent and may be mutually referenced, and technical features in different embodiments may be combined based on an internal logical relationship thereof to form a new embodiment.

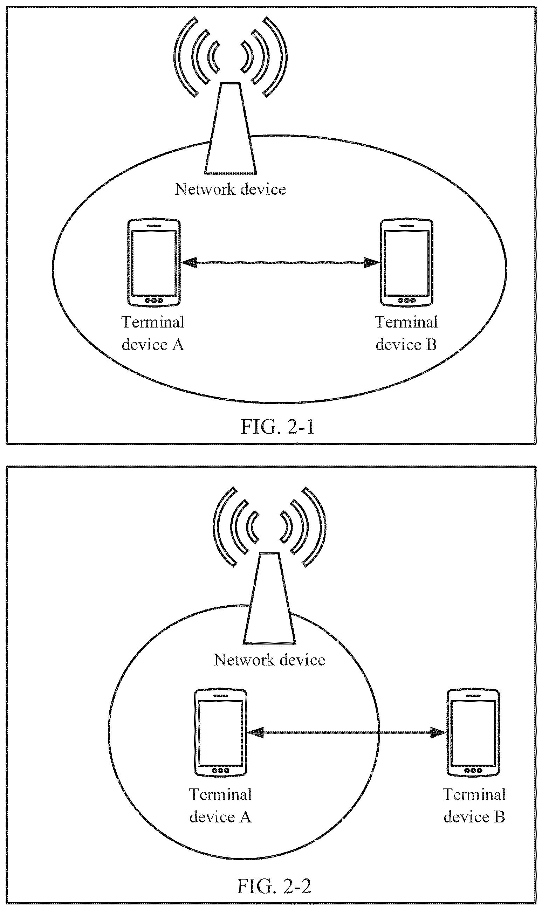

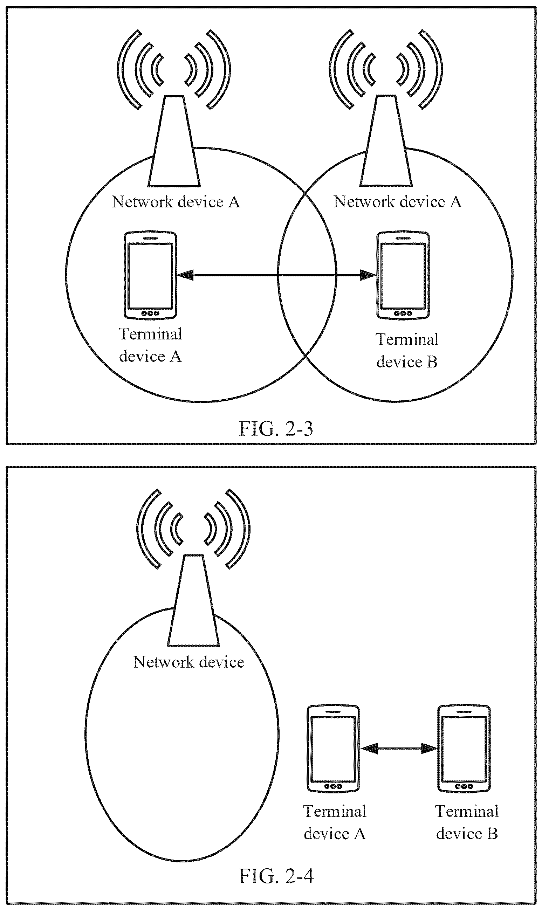

First, a basic architecture of a communication system provided in embodiments of this application is described. FIG. 2-1 to FIG. 2-4 show basic architectures of a communication system according to an embodiment of this application.

In FIG. 2-1, the communication system may include, for example, a terminal device A and a terminal device B that are in a coverage area of a network device, and the terminal device A and the terminal device B may perform SL communication. For example, the terminal device A may receive an S-SSB or a PSSCH from the terminal device B, and the PSSCH is used to carry a CSI-RS. Optionally, another terminal device may be further included in the coverage area of the network device, which is not shown in FIG. 2-1. In FIG. 2-2, the communication system may include, for example, a terminal device A that is in a coverage area of a network device and a terminal device B that is not in the coverage area of the network device, and the terminal device A and the terminal device B may perform SL communication. For example, the terminal device A may receive an S-SSB or a PSSCH from the terminal device B, and the PSSCH is used to carry a CSI-RS. Optionally, another terminal device may be further included in the coverage area of the network device, and another terminal device may be further included outside the coverage area of the network device, which is not shown in FIG. 2-2. In FIG. 2-3, the communication system may include, for example, a terminal device A that is in a coverage area of a network device A and a terminal device B that is in a coverage area of a network device B, and the terminal device A and the terminal device B may perform SL communication. For example, the terminal device A may receive an S-SSB or a PSSCH from the terminal device B, and the PSSCH is used to carry a CSI-RS. Optionally, another terminal device may be further included in the coverage area of the network device A, and another terminal device may be further included in the coverage area of the network device B, which is not shown in FIG. 2-3. In FIG. 2-4, the communication system may include, for example, a terminal device A and a terminal device B, and neither the terminal device A nor the terminal device B is in a coverage area of a network device. The terminal device A and the terminal device B may perform SL communication. For example, the terminal device A may receive an S-SSB or a PSSCH from the terminal device B, and the PSSCH is used to carry a CSI-RS. Optionally, another terminal device may be included in the coverage area of the network device, and another terminal device may be further included in the coverage area of the network device, which is not shown in FIG. 2-4.

It should be noted that FIG. 2-1 to FIG. 2-4 are merely diagrams, and do not constitute a limitation on a scenario to which the technical solutions provided in this application are applicable. Optionally, different devices in FIG. 2-1 to FIG. 2-4 may communicate with each other through a relay terminal. For example, the network device may allocate a resource to the terminal device A through the relay terminal device, which is a sidelink terminal-to-network relay (sidelink UE-to-Network relay) scenario. For another example, the terminal device A may perform SL communication with the terminal device B through the relay terminal, which is communication between a source terminal (source UE) and a relay terminal (relay UE) and communication between the relay terminal and a destination terminal (target UE) in a sidelink terminal-to-terminal relay (sidelink UE-to-UE relay) scenario. The terminal device A may be understood as a source terminal, the terminal device B may be understood as a destination terminal, and the relay terminal device is a terminal device used for relaying. The following describes in detail each device in the communication system.

1. Terminal device

The terminal device is an entity that is on a user side and that is configured to receive a signal, or send a signal, or receive a signal and send a signal. The terminal device is configured to provide one or more of a voice service and a data connectivity service for a user. The terminal device may be a device that has a wireless transceiver function and that may cooperate with a network device to provide a communication service for the user. Specifically, the terminal device may be user equipment (user equipment, UE), an access terminal, a subscriber unit, a subscriber station, a mobile station, a remote station, a remote terminal, a mobile device, a terminal, a wireless communication device, a user agent, a user apparatus, or a roadside unit (roadside unit, RSU). The terminal device may alternatively be an uncrewed aerial vehicle, an internet of things (internet of things, IoT) device, a station (station, ST) in a wireless local area network (wireless local area network, WLAN), a cellular phone (cellular phone), a smartphone (smartphone), a cordless phone, a wireless data card, a tablet computer, a session initiation protocol (session initiation protocol, SIP) phone, a wireless local loop (wireless local loop, WLL) station, a personal digital assistant (personal digital assistant, PDA) device, a laptop computer (laptop computer), a machine type communication (machine type communication, MTC) terminal, a handheld device with a wireless communication function, a computing device or another processing device connected to a wireless modem, a vehicle-mounted device, a wearable device (also referred to as a wearable smart device), a virtual reality (virtual reality, VR) terminal, an augmented reality (augmented reality, AR) terminal, a wireless terminal in telemedicine (remote medical), a wireless terminal in industrial control (industrial control), a wireless terminal in self driving (self driving), a wireless terminal in a smart grid (smart grid), a wireless terminal in transportation safety (transportation safety), a wireless terminal in a smart city (smart city), a wireless terminal in a smart home (smart home), or the like. The terminal device may alternatively be a terminal in a 5G system, or a terminal in a next-generation communication system. This is not limited in embodiments of this application. Optionally, the terminal device may be referred to as an anchor device.

A device form of the terminal device is not limited in embodiments of this application. An apparatus for implementing a function of a terminal device may be a terminal device, or may be an apparatus, for example, a chip system, that can enable a terminal device to implement the function. The apparatus may be mounted in the terminal device or used together with the terminal device. In embodiments of this application, the chip system may include a chip, or may include a chip and another discrete component.

2. Network device

The network device is an entity that is on a network side and that is configured to send a signal, or receive a signal, or send a signal and receive a signal. The network device may be an apparatus that is deployed in a radio access network (radio access network, RAN) and that provides a wireless communication function for a terminal device, for example, may be a transmission reception point (transmission reception point, TRP), a base station, or a control node in various forms, for example, a network controller or a wireless controller. Specifically, the network device may be a macro base station in various forms, a micro base station (also referred to as a small cell) in a heterogeneous network (heterogeneous network, HetNet) scenario, a relay station, an access point (access point, AP), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseBand unit, BBU) or a radio frequency unit (remote radio unit, RRU) in a distributed base station scenario, a transmission and reception point (transmission and reception point, TRP), a transmission point (transmission point, TP), a mobile switching center, a satellite, an uncrewed aerial vehicle, or the like; or may be an antenna panel of a base station. The control node may be connected to a plurality of base stations, and configure resources for a plurality of terminals covered by the plurality of base stations. In systems using different radio access technologies, names of devices having a function of a base station may vary. For example, the device may be a gNB in 5G, a network side device in a network after 5G, a network device in a future evolved public land mobile (communication) network (public land mobile network, PLMN), or a device that has a function of a base station in device-to-device (device-to-device, D2D) communication, machine-to-machine (machine-to-machine, M2M) communication, or internet of vehicles communication. A specific name of the network device is not limited in this application. The network device may alternatively be a baseband unit pool (BBU pool), an RRU, or the like in an open access network (open RAN, O-RAN or ORAN) or a cloud radio access network (cloud radio access network, CRAN).

In a possible implementation, a plurality of network devices collaborate to assist a terminal in implementing radio access, and different network devices respectively implement some functions of a base station. For example, the network device may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a BBU. The RU may be included in a radio frequency device or a radio frequency unit, for example, included in an RRU, an active antenna processing unit (active antenna unit, AAU), or a remote radio head (remote radio head, RRH). It may be understood that the network device may be a CU node, a DU node, or a device including a CU node and a DU node. In addition, the CU may be classified as a network device in an access network RAN, or the CU may be classified as a network device in a core network CN. This is not limited herein.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

It should be noted that the communication system shown in FIG. 2-1 to FIG. 2-4 does not constitute a limitation on a communication system to which embodiments of this application are applicable. A communication method provided in embodiments of this application is applicable to communication systems of various standards, for example, a long term evolution (long term evolution, LTE) communication system, a 5G communication system, a 6G communication system, and a future communication system. The communication method provided in embodiments of this application is further applicable to a wireless local area network (wireless local area network, WLAN) system, V2X, LTE-vehicle (LTE-vehicle, LTE-V), vehicle-to-vehicle (vehicle-to-vehicle, V2V), an internet of vehicles, machine type communication (machine type communication, MTC), an IoT, LTE-machine-to-machine (LTE-machine-to-machine, LTE-M), M2M, an internet of things, and the like. In addition, it should be further noted that names of network elements in the communication system are not limited in embodiments of this application. For example, in communication systems of different standards, the network elements may have other names. For another example, when a plurality of network elements are integrated into a same physical device, the physical device may alternatively have another name.

The following specifically describes, with reference to FIG. 2-1 to FIG. 2-4, the communication method provided in embodiments of this application. Specifically, a terminal device (for example, a first terminal device or a second terminal device) in the following descriptions may be the terminal device in FIG. 2-1 to FIG. 2-4, and a network device in the following descriptions may be the network device in FIG. 2-1 to FIG. 2-4.

It should be noted that names of messages between network elements, names of parameters in the messages, or the like in the following embodiments of this application are merely examples, and may be other names during specific implementation. This is not specifically limited in embodiments of this application.

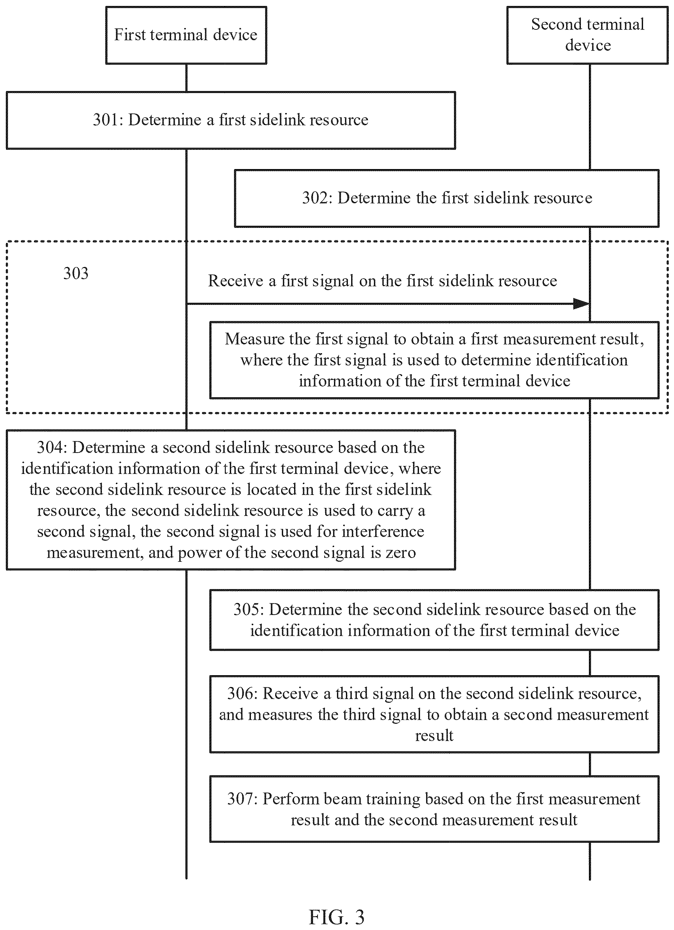

FIG. 3 shows a communication method according to an embodiment of this application. The communication method includes but is not limited to the following steps.

301: A first terminal device determines a first sidelink resource.

Optionally, the first terminal device may determine the first sidelink resource based on configuration information. The configuration information may be predefined or (pre)configured in a terminal device (for example, the first terminal device) in this application. For example, the configuration information is indicated by a network device to the terminal device (for example, the first terminal device) in this application by using a higher layer parameter (for example, RRC signaling). It should be noted that "predefined" in this application means "predefined in a protocol", and "preconfigured" in this application relates to information recorded in hardware and/or software of the terminal device (for example, the first terminal device) in this application.

A resource (for example, the first sidelink resource) in this application may include a time domain resource and/or a frequency domain resource. For example, a time domain resource of the first sidelink resource may include at least one of the following: a frame, a subframe, a slot, a sub-slot, and a symbol. The symbol in this application may be an OFDM symbol. For ease of description, the OFDM symbol is briefly referred to as a symbol below. For another example, a frequency domain resource of the first sidelink resource may include at least one of the following: an RE, an RB, an RBG, a sub-channel, a resource block set, a resource pool, a BWP, and a carrier.

The following describes the first sidelink resource with reference to specific examples. Details are as follows:

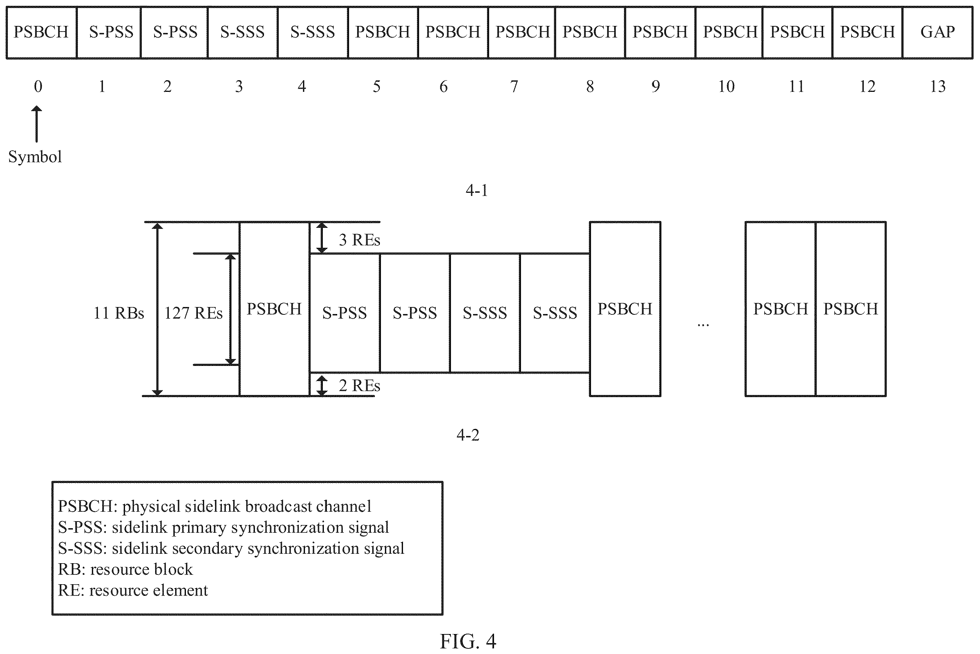

1. The first sidelink resource includes a resource occupied by an S-SSB. The S-SSB may include one or more of an S-PSS, an S-SSS, and a PSBCH (the PSBCH may include a DMRS for PSBCH and a payload for PSBCH, and the payload for PSBCH may represent an SL-MIB carrying the PSBCH). The following describes in detail, with reference to FIG. 4, the resource occupied by the S-SSB in terms of a time domain and a frequency domain. In 4-1 in FIG. 4, in one slot, a length of the S-SSB in the slot is 14 symbols. A symbol 0 and a symbol 5 to a symbol 12 are used for PSBCHs; a symbol 1 and a symbol 2 are used for S-PSSs; a symbol 3 and a symbol 4 are used for S-SSSs; and a symbol 13 is set to null, may also be referred to as a gap (GAP) symbol, and may be used for transmit/receive switching. In 4-2 in FIG. 4, the S-SSB may occupy 11 RBs, that is, 132 consecutive subcarriers. The PSBCH may occupy 132 subcarriers. The S-PSS and the S-SSS are sequences with a length of 127, and therefore may occupy 127 REs, that is, consecutive subcarriers numbered from 2 to 128. In other words, subcarriers numbered 0, 1, 129, 130, and 131 are set to 0. With reference to FIG. 4, a time domain resource occupied by the S-SSB does not include the symbol 13.

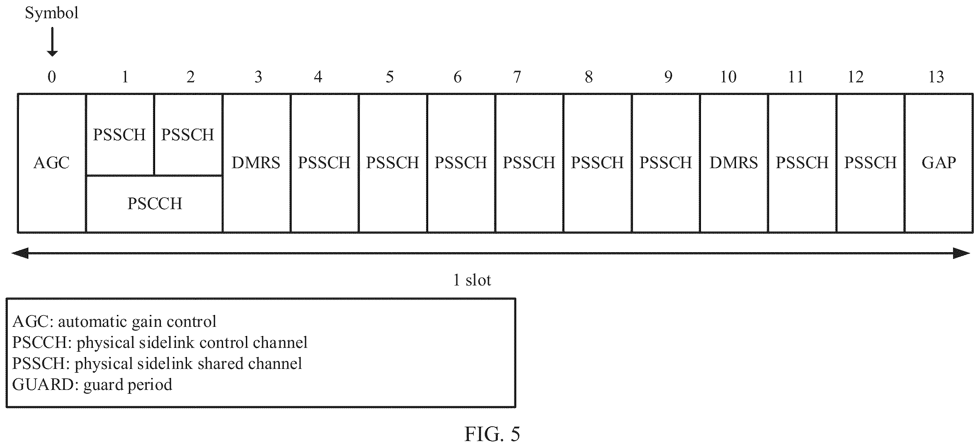

2. The first sidelink resource includes a resource occupied by a PSSCH and/or a resource occupied by a PSCCH. The PSSCH may include one or more of a CSI-RS (the CSI-RS is carried in the PSSCH), a DMRS for PSSCH, second-stage SCI, and data carried in the PSSCH. The PSCCH may include one or more of a DMRS for PSCCH and first-stage SCI. The following describes in detail, with reference to FIG. 5, the resource occupied by the PSSCH and/or the resource occupied by the PSCCH in terms of a time domain. In FIG. 5, in one slot, a symbol 0 to a symbol 13 are sequentially arranged from left to right. The symbol 0 is used for automatic gain control (automatic gain control, AGC); a symbol 1 and a symbol 2 are used for a PSCCH and PSSCHs, and the PSCCH and the PSSCH are located on different frequency domain resources; a symbol 3 and a symbol 10 carry DMRSs, for example, DMRSs for PSSCH; the symbol 13 is used as a guard period (guard period, GP); and other symbols are used for PSSCHs.

Optionally, the first sidelink resource may be one or more RBs in one slot, for example, one or more consecutive RBs in one slot. There may be one or more slots in the first sidelink resource. This is not limited herein.

302: A second terminal device determines the first sidelink resource.

Step 302 is similar to step 301, and details are not described herein again.

303: The second terminal device receives a first signal on the first sidelink resource, and measures the first signal to obtain a first measurement result, where the first signal is used to determine identification information of the first terminal device.

Correspondingly, the first terminal device sends (for example, broadcasts) the first signal on the first sidelink resource. For example, the first terminal device sends the first signal on the first sidelink resource by using a transmit beam.

Optionally, the second terminal device may receive, on the first sidelink resource, the first signal broadcast by the first terminal device. For example, the second terminal device may receive, on the first sidelink resource by using a receive beam, the first signal broadcast by the first terminal device.

In this application, a beam is a communication resource. Beams may be classified into transmit beams and receive beams. A technology for forming the beam may be a beamforming technology or another technical means. The beamforming technology is not limited herein. Usually, a transmit end may send data to a receive end by using a transmit beam, and the receive end may receive the data from the transmit end by using a receive beam. The transmit beam and the receive beam may be referred to as a pair of beams. Both the transmit end and the receive end herein may be terminal devices.

In a possible implementation, when the first sidelink resource includes the resource occupied by the S-SSB, the first signal may be an S-SSB. The S-SSB may be used for synchronization, and may be further used for beam training or the like. For example, the second terminal device may measure an S-PSS, an S-SSS, or a DMRS for PSBCH to obtain the first measurement result. In another possible implementation, when the first sidelink resource includes the resource occupied by the PSSCH and/or the resource occupied by the PSCCH, the first signal may be a PSSCH or a PSCCH. For example, the second terminal device may measure a CSI-RS or a DMRS for PSSCH to obtain the first measurement result. For another example, the second terminal device may measure a DMRS for PSCCH to obtain the first measurement result.

A measurement result (for example, the first measurement result) in this application is a result obtained by measuring signal quality or signal energy based on a wireless signal (for example, an S-PSS, an S-SSS, a DMRS for PSBCH, or a CSI-RS), for example, one or more of RSRP, RSRQ, an RSSI, and an SINR. For meanings of the foregoing terms, reference may be made, for example, to a specification of a protocol or a standard of a communication technology used by a communication link.

Identification information of a terminal device (for example, the first terminal device) in this application is used to uniquely identify the terminal device. The following uses an identifier of the first terminal device as an example for description. Details are as follows:

1. When the first signal is an S-SSB, the identification information of the first terminal device may be an SSID corresponding to the first terminal device. In this application, the SSID may also be referred to as a sidelink SSID (sidelink synchronization signal identifier, SL-SSID), and a name of the SSID is not limited in this application. The SSID may satisfy the following formula: $N_{ID}^{SL} = N_{ID,1}^{SL} + 336 N_{ID,2}^{SL}$. $N_{ID}^{SL}$ is the SSID, $N_{ID,1}^{SL} \in \{0,1,\dots,335\}$, and $N_{ID,2}^{SL} \in \{0,1\}$. SSIDs are divided into two sets, where an id_net set includes $N_{ID}^{SL} = 0,1,\dots,335$, and an id_oon set includes $N_{ID}^{SL} = 336,337,\dots,671$. It should be noted that there are 672 SSIDs in an SL communication scenario. It should be noted that the SSID has the following functions: (1) Identify synchronization source types, for example, a global navigation satellite system (global navigation satellite system, GNSS), a network device, and a reference terminal device. Through configuration of different SSIDs for different S-SSBs, a receive end may identify synchronization source types. For example, if an SSID is 0 or 336, it indicates that a synchronization source type is the GNSS. (2) Identify whether a synchronization source is in or outside coverage. A synchronization source within cell coverage may use an SSID with a value ranging from 1 to 335, and a synchronization source outside cell coverage may use an SSID with a value ranging from 337 to 671. (3) Identify whether a transmit end is directly or indirectly connected to a synchronization source. When sending an SSB, the transmit end may use an SSID based on whether the transmit end is directly or indirectly connected to the synchronization source. An SSID used by a transmit end directly connected to a synchronization source reflects a high synchronization priority of the transmit end. An SSID used by a transmit end indirectly connected to a synchronization source reflects a low synchronization priority of the transmit end. The transmit end or the receive end herein is a device whose device type is a terminal device. Optionally, the identification information of the first terminal device may be carried in the S-SSB, for example, an S-PSS, an S-SSS, a DMRS for PSBCH, or a payload for PSBCH. For example, the S-PSS satisfies the following formula: $d_{S-PSS}(n)$

= 1 - 2x(m). $d_{S-PSS}(n)$ is the S-PSS, $m = \left(n + 22 + 43N_{ID,2}^{SL}\right) \bmod 127$, $0 \leq n < 127$, mod is a modulo operation, $x(i+7) = (x(i+4) + x(i)) \bmod 2$, and $[x(6)\,x(5)\,x(4)\,x(3)\,x(2)\,x(1)\,x(0)] = [1\,1\,1\,0\,1\,1\,0]$. For another example, the S-SSS satisfies the following formula: $d_{S-SSS}(n) = [1 - 2x_0((n + m_0) \bmod 127)][[1 - 2x_1((n + m_1) \bmod 127)]$.

$$m_0 = 15\left\lfloor \frac{N_{ID,1}^{SL}}{112} \right\rfloor + 5N_{ID,2}^{SL} \quad , \qquad m_1 = N_{ID,1}^{SL} \bmod 112$$ , $0 \leq n < 127$, $x_0(i+7) = (x_0(i+4) + x_0(i)) \bmod 2$, and $[x_0(6)\,x_0(5)\,x_0(4)\,x_0(3)\,x_0(2)\,x_0(1)\,x_0(0)] = [0\,0\,0\,0\,0\,0\,1]$. $x_1(i+7) = (x_1(i+1) + x_1(i)) \bmod 2$, and $[x_1(6)\,x_1(5)\,x_1(4)\,x_1(3)\,x_1(2)\,x_1(1)\,x_1(0)] = [0\ 0\ 0\ 0\ 0\ 0\ 1]$.

2. When the first signal is a PSSCH or a PSCCH, the identification information of the first terminal device may be a source L1 ID or a source L2 ID. Optionally, the identification information of the first terminal device may be carried in SCI. For example, the identification information of the first terminal device may be carried in first-stage SCI or second-stage SCI.

304: The first terminal device determines a second sidelink resource based on the identification information of the first terminal device, where the second sidelink resource is located in the first sidelink resource, the second sidelink resource is used to carry a second signal, the second signal is used for interference measurement, and power of the second signal is zero.

The second signal may be referred to as an RS-IM. A name of the second signal is not limited in this application. That the second signal is used for interference measurement may be understood as at least one of the following: The second signal is used for interference management, the second signal is used for interference coordination, and the like. This is not limited herein. Optionally, that the power of the second signal is zero may be understood as at least one of the following: Energy of the second signal is set to null, the first terminal device does not carry the first signal on the second sidelink resource, the first terminal device skips the second sidelink resource when performing resource mapping for the first signal on the first sidelink resource, and the like.

Optionally, step 304 may include: The first terminal device determines a first pattern, where the first pattern is used to determine a resource position of the second signal (for example, the first pattern is used to determine a time-frequency resource position of the second signal). The first terminal device determines a candidate resource set based on the first pattern and the first sidelink resource, where a candidate resource in the candidate resource set is used to carry the second signal. The first terminal device determines the second sidelink resource based on the identification information of the first terminal device and the candidate resource set.

The first pattern may be predefined or (pre)configured in the terminal device (for example, the first terminal device or the second terminal device) in this application. For example, the first pattern may be (pre)configured in a resource pool or an SL BWP. For another example, the first pattern may be indicated by the network device to the terminal device (for example, the first terminal device or the second terminal device) in this application by using a higher layer parameter (for example, RRC signaling). Optionally, the first pattern may include at least one RE, one RE includes one time unit and one frequency domain unit, the time unit may be a symbol, and the frequency domain unit may be an RE, which is related to a subcarrier spacing. It may also be understood that the first pattern includes at least Q time units (for example, Q consecutive time units in one slot) in time domain, and includes at least N frequency domain units (for example, N consecutive frequency domain units in one RB) in frequency domain. Optionally, Q is a predefined or (pre)configured integer greater than or equal to 1 and less than or equal to 14. Optionally, N is a predefined or (pre)configured integer greater than or equal to 1 and less than or equal to 12. For example, Q=2, and N=2. For another example, Q=1, and N=4.

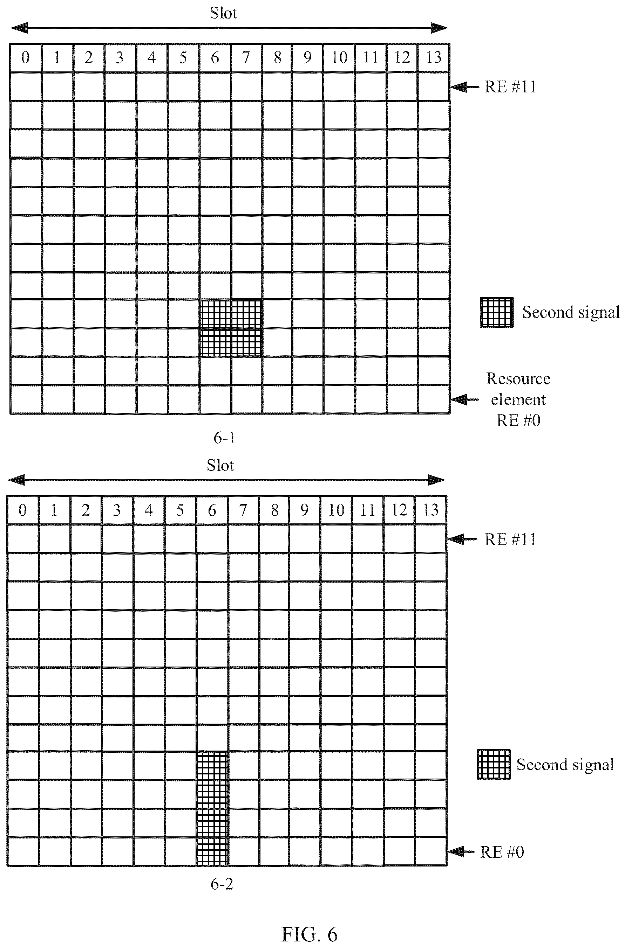

The following describes the first pattern with reference to an example. Specifically, in FIG. 6, one slot includes 14 symbols, which are separately a symbol 0 to a symbol 13, and one RB includes 12 REs, which are separately an RE #0 to an RE #11. In 6-1 in FIG. 6, the second signal occupies REs #2 and #3 on symbols 6 and 7. In other words, the first pattern includes two consecutive symbols in time domain, and includes two consecutive REs in frequency domain. In other words, the time-frequency resource position of the second signal includes: $\{\{k_0, l_0\}, \{k_0+1, l_0\}, \{k_0, l_0+1\}, \{k_0+1, l_0+1\}\}$, where $k_0=2$, and $l_0=6$. In 6-2 in FIG. 6, the second signal occupies REs #0 to #3 on a symbol 6. In other words, the first pattern includes one symbol in time domain, and includes four consecutive REs in frequency domain. In other words, the time-frequency resource position of the second signal includes: $\{\{k_0, l_0\}, \{k_0+1, l_0\}, \{k_0+2, l_0\}, \{k_0+3, l_0\}\}$, where $k_0=0$, and $l_0=6$. $k_0$ represents a frequency domain position, and $l_0$ represents a time domain position.

Optionally, the time-frequency resource position of the second signal includes a time domain position of the second signal and a frequency domain position of the second signal. The time domain position of the second signal may be understood as, for example, an absolute index of a time unit in a slot. As shown in 6-1 in FIG. 6, $l_0$ is an absolute index of a symbol of a slot in which the second signal is located. The frequency domain position of the second signal may be understood as, for example, an absolute index or a relative index of a frequency domain unit in an RB. In 6-1 in FIG. 6, $k_0$ is an absolute index of a frequency domain position of the second signal, or $k_0$ is a relative index of the second signal relative to an offset in frequency domain. A value of the offset is not limited in this application. The offset may be (pre)defined, preconfigured, or configured by a network.

In this application, a frequency density K may represent a density of the second signal in frequency domain. For example, if K is 1, it indicates that each RB is occupied by the second signal. For another example, if K is 2, it indicates that every other RB is occupied by the second signal. It may also be understood that resources are periodically occupied by the second signal at an interval of K RBs in a form of the first pattern. Optionally, K is a predefined or (pre)configured integer greater than or equal to 1.

Optionally, candidate resources in the candidate resource set are consecutively numbered first in ascending order of indexes of frequency domain units and then in ascending order of indexes of time units. In this application, the ascending order of indexes may also be understood as an increasing order of indexes. For example, one slot includes 14 symbols, and the 14 symbols are arranged in ascending order or increasing order of indexes. Optionally, the ascending order of indexes of time units may also be understood as a sequential order of indexes of time units. For example, one slot includes 14 symbols, a symbol whose index is 0 is located before a symbol whose index is 1, and the symbol whose index is 1 is located before a symbol whose index is 2. The same applies to the rest. Optionally, the ascending order or increasing order of indexes of frequency domain units may be understood as an ascending order of frequency domain positions.

In a possible implementation, the first sidelink resource includes the resource occupied by the S-SSB, and the candidate resource in the candidate resource set overlaps the resource occupied by the S-SSB. Optionally, the candidate resource in the candidate resource set does not overlap a resource occupied by one or more of the S-PSS, the S-SSS, and the DMRS for PSBCH that are included in the S-SSB.

In another possible implementation, the first sidelink resource includes the resource occupied by the PSSCH and/or the resource occupied by the PSCCH, and the candidate resource in the candidate resource set overlaps the resource occupied by the PSSCH and/or the resource occupied by the PSCCH. Optionally, when the candidate resource in the candidate resource set overlaps the resource occupied by the PSSCH, the candidate resource in the candidate resource set does not overlap a resource occupied by one or more of the CSI-RS and the DMRS for PSSCH. Optionally, when the candidate resource in the candidate resource set overlaps the resource occupied by the PSSCH, the candidate resource in the candidate resource set may alternatively not overlap the resource occupied by the DMRS for PSCCH.

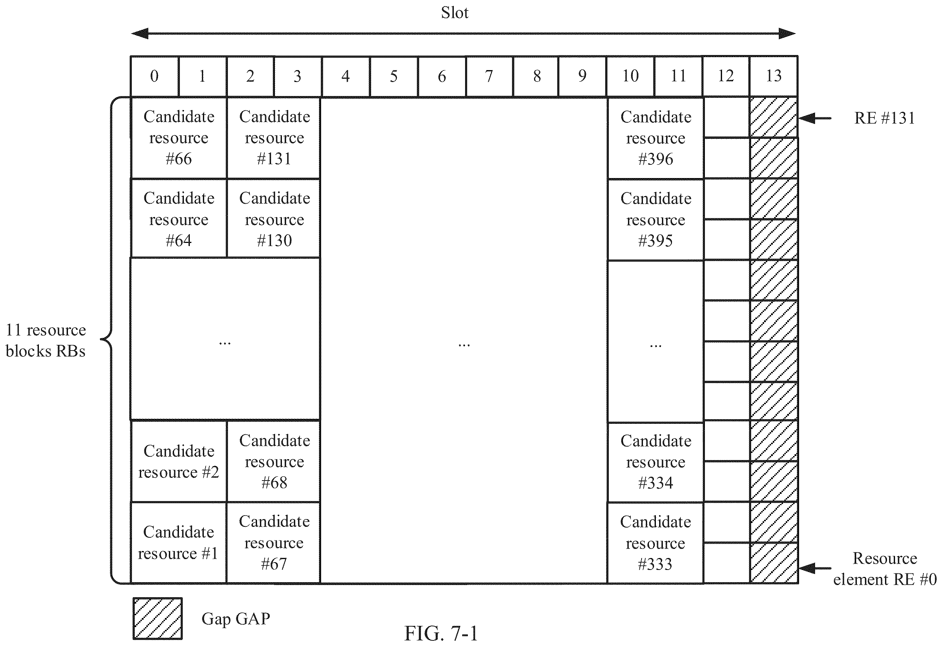

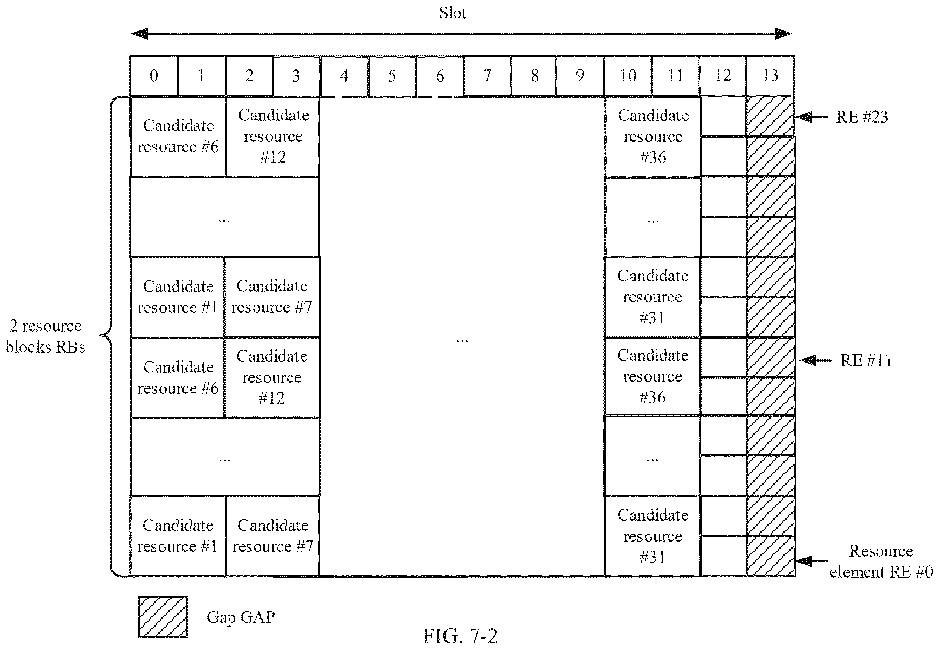

The following describes the candidate resource set by using an example in which the first sidelink resource includes the resource occupied by the S-SSB, and the candidate resource in the candidate resource set overlaps the resource occupied by the S-SSB. Specifically, as shown in FIG. 7-1 and FIG. 7-2, any candidate resource in the candidate resource set includes two symbols in time domain, and includes two REs in frequency domain. The two symbols are physically consecutive symbols, and the two REs are physically consecutive REs. In this application, "physically consecutive" may mean that time domain positions or frequency domain positions are consecutive. On the contrary, "physically inconsecutive" may mean that time domain positions or frequency domain positions are inconsecutive. In FIG. 7-1 and FIG. 7-2, the S-SSB occupies 11 RBs in one slot. Because a time domain resource occupied by the S-SSB does not include a symbol 13, a resource used for transmission of the S-SSB includes a total of 11*12*13=1716 REs. In addition, because the first pattern includes two consecutive symbols in time domain, includes two consecutive REs in frequency domain, and the symbol 13 is used to carry a gap, in FIG. 7-1 and FIG. 7-2, no candidate resource is configured on a symbol 12. It can be learned from FIG. 7-1 and FIG. 7-2 that candidate resources in the candidate resource set are consecutively numbered first in ascending order of indexes of frequency domain units and then in ascending order of indexes of time units. In FIG. 7-1, a frequency density is an integer greater than or equal to 11, and a total quantity of candidate resources in the candidate resource set may be 396. When the candidate resources in the candidate resource set are numbered, six candidate resources that occupy REs #0 to #11 on symbols 0 and 1 in a 1st RB are first numbered, for example, numbered as a candidate resource #1 to a candidate resource #7; and then six candidate resources that occupy REs #0 to #11 on symbols 0 and 1 in a 2nd RB are numbered, for example, numbered as a candidate resource #8 to a candidate resource #13. The rest may be deduced by analogy. After six candidate resources that occupy REs #0 to #11 on symbols 0 and 1 in an 11th RB are numbered, six candidate resources that occupy the REs #0 to #11 on symbols 2 and 3 in the 1st RB are

numbered, for example, numbered as a candidate resource #67 to a candidate resource #72; and then six candidate resources that occupy the REs #0 to #11 on symbols 2 and 3 in the 2nd RB are numbered, for example, numbered as a candidate resource #73 to a candidate resource #78. The rest may be deduced by analogy. In FIG. 7-2, a frequency density is 1, and a total quantity of candidate resources in the candidate resource set may be 36, which is equivalent to that the candidate resources repeatedly appear in two RBs in one slot. Therefore, when the candidate resources in the candidate resource set are numbered, six candidate resources that occupy REs #0 to #11 on symbols 0 and 1 in a 1st RB are first numbered, for example, numbered as a candidate resource #1 to a candidate resource #6; and then six candidate resources that occupy the REs #0 to #11 on symbols 2 and 3 in the 1st RB are numbered, for example, numbered as a candidate resource #7 to a candidate resource #12. The rest may be deduced by analogy. It should be understood that, in this case, six candidate resources that occupy REs #0 to #11 on symbols 0 and 1 in a 2nd RB are numbered, and numbers are still the candidate resource #1 to the candidate resource #6. Certainly, the frequency density may alternatively be 2, and a total quantity of candidate resources in the candidate resource set may be 72, which is not shown in FIG. 7-1 and FIG. 7-2.

When the candidate resource in the candidate resource set does not overlap the resource occupied by one or more of the S-PSS, the S-SSS, and the DMRS for PSBCH that are included in the S-SSB, or the candidate resource in the candidate resource set does not overlap the resource occupied by one or more of the CSI-RS and the DMRS for PSSCH, that the first terminal device determines the candidate resource set based on the first pattern and the first sidelink resource is specifically described as follows: the first terminal device determines a first resource set based on the first pattern and the first sidelink resource, where the first resource set includes R time units in time domain, and includes T frequency domain units in frequency domain, R is an integer greater than or equal to 1 and less than or equal to Q, and T is an integer greater than or equal to 1 and less than or equal to N. When a resource in the first resource set overlaps a resource occupied by at least one signal, the first terminal device excludes, from the first resource set, a resource that overlaps the resource occupied by the at least one signal, to obtain the candidate resource set. The at least one signal includes one or more of the S-PSS, the S-SSS, and the DMRS for PSBCH. Alternatively, the at least one signal includes one or more of the CSI-RS and the DMRS for PSSCH. Optionally, the at least one signal may alternatively include the DMRS for PSCCH.

The following uses an example in which the first sidelink resource includes the resource occupied by the S-SSB to describe how the first terminal device excludes, from the first resource set, the resource that overlaps the resource occupied by the at least one signal, to obtain the candidate resource set. Details are as follows:

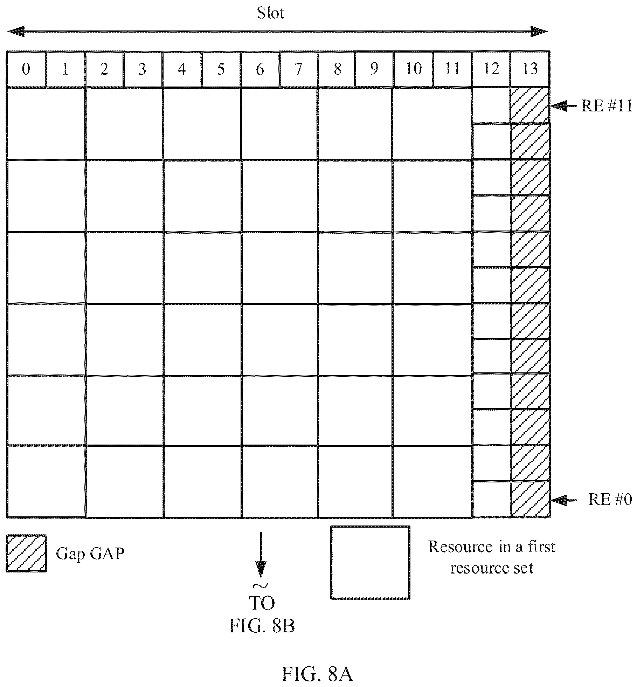

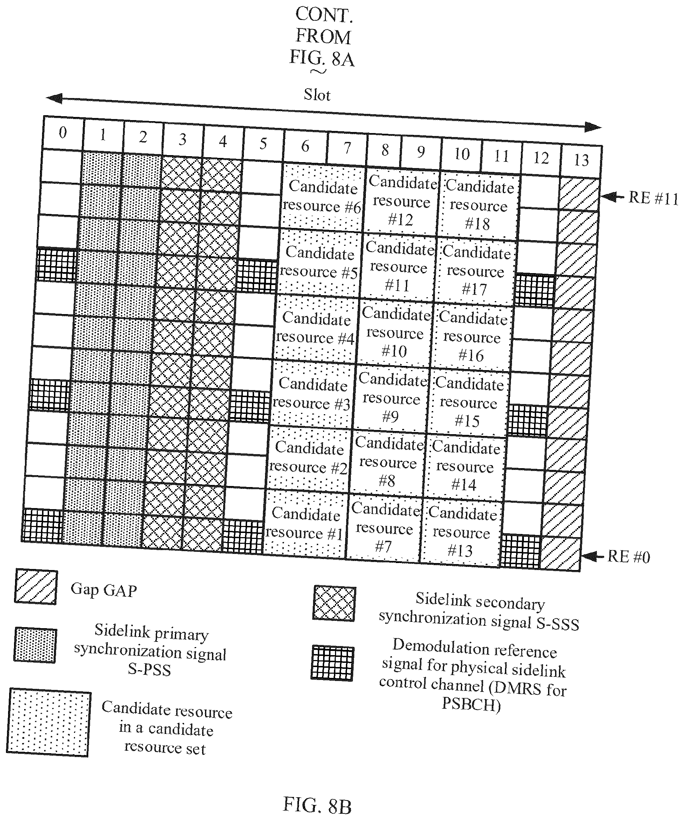

1. As shown in FIG. 8A and FIG. 8B, the first terminal device determines the first resource set based on the first pattern and the first sidelink resource. Any resource in the first resource set includes two physically consecutive symbols in time domain, and includes two physically consecutive REs in frequency domain. Because resources in the first resource set overlap resources occupied by the S-PSS and the S-SSS, the first terminal device excludes, from the first resource set, the resources that overlap the resources occupied by the S-PSS and the S-SSS. For example, the S-PSS occupies REs #0 to #11 on symbols 1 and 2. Therefore, the first terminal device excludes, from the first resource set, resources that overlap these resources. For another example, the S-SSS occupies REs #0 to #11 on symbols 3 and 4. Therefore, the first terminal device excludes, from the first resource set, resources that overlap these resources. In other words, in FIG. 8A and FIG. 8B, the first terminal device excludes, from the first resource set at a granularity of the first pattern, the resources that overlap these resources. In addition, when a frequency density is 1, and candidate resources in the candidate resource set are numbered, six candidate resources that occupy REs #0 to #11 on symbols 6 and 7 in a 1st RB may be first numbered, for example, numbered as a candidate resource #1 to a candidate resource #6; and then six candidate resources that occupy the REs #0 to #11 on symbols 8 and 9 in the 1st RB are numbered, for example, numbered as a candidate resource #7 to a candidate resource #12. The rest may be deduced by analogy.

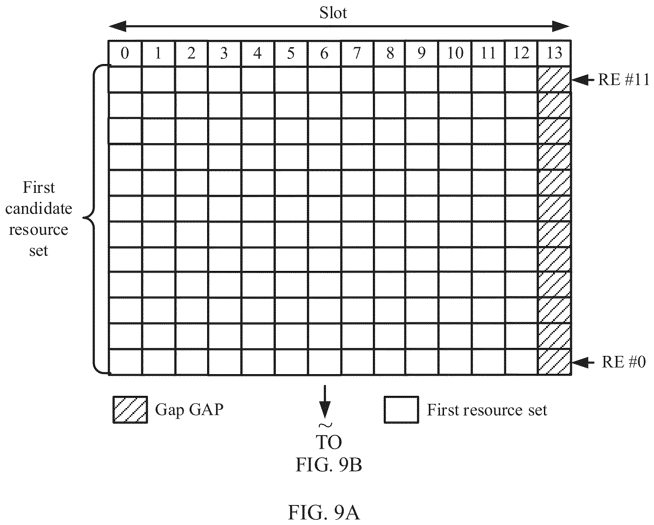

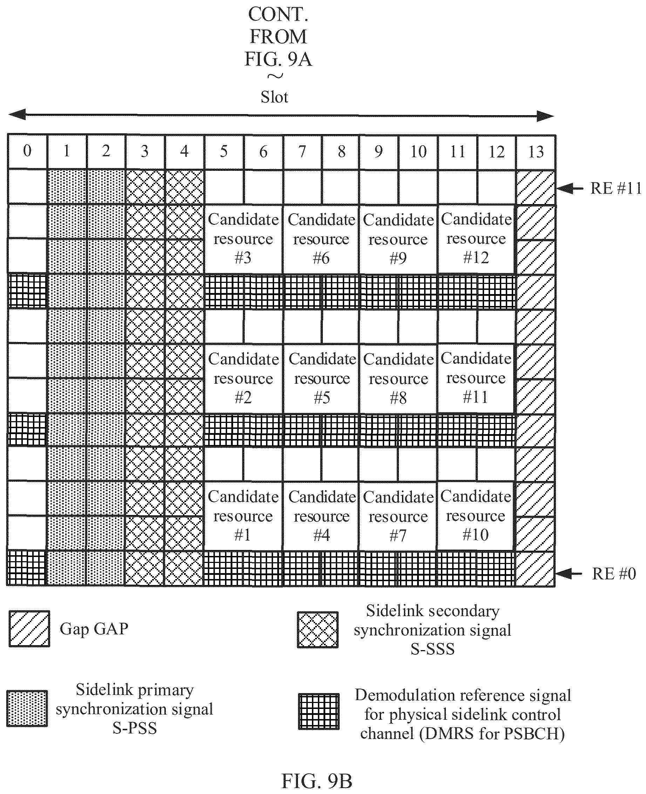

2. As shown in FIG. 9A and FIG. 9B, the first terminal device determines the first resource set based on the first pattern and the first sidelink resource. The first resource set includes REs #0 to #11 on symbols 0 to 12. Because resources in the first resource set overlap resources occupied by the S-PSS, the S-SSS, and the DMRS for PSBCH, the first terminal device excludes, from the first resource set, the resources that overlap the resources occupied by the S-PSS, the S-SSS, and the DMRS for PSBCH. For example, the S-PSS occupies the REs #0 to #11 on symbols 1 and 2. Therefore, the first terminal device excludes, from the first resource set, resources that overlap these resources. For another example, the S-SSS occupies the REs #0 to #11 on symbols 3 and 4. Therefore, the first terminal device excludes, from the first resource set, resources that overlap these resources. Because the first pattern includes two physically consecutive symbols in time domain, and includes two physically consecutive REs in frequency domain, and the first resource set includes the REs #0 to #11 on the symbols 0 to 12, any candidate resource in the candidate resource set includes two physically consecutive symbols in time domain, and includes two physically consecutive REs in frequency domain, that is, as illustrated by a candidate resource #1 to a candidate resource #12 in FIG. 9A and FIG. 9B. Numbers of candidate resources in FIG. 9A and FIG. 9B are similar to those in FIG. 8A and FIG. 8B, and details are not described herein.

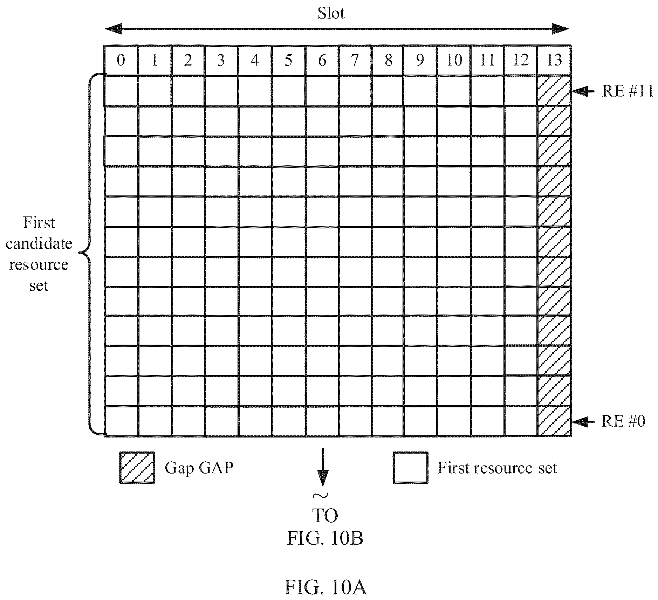

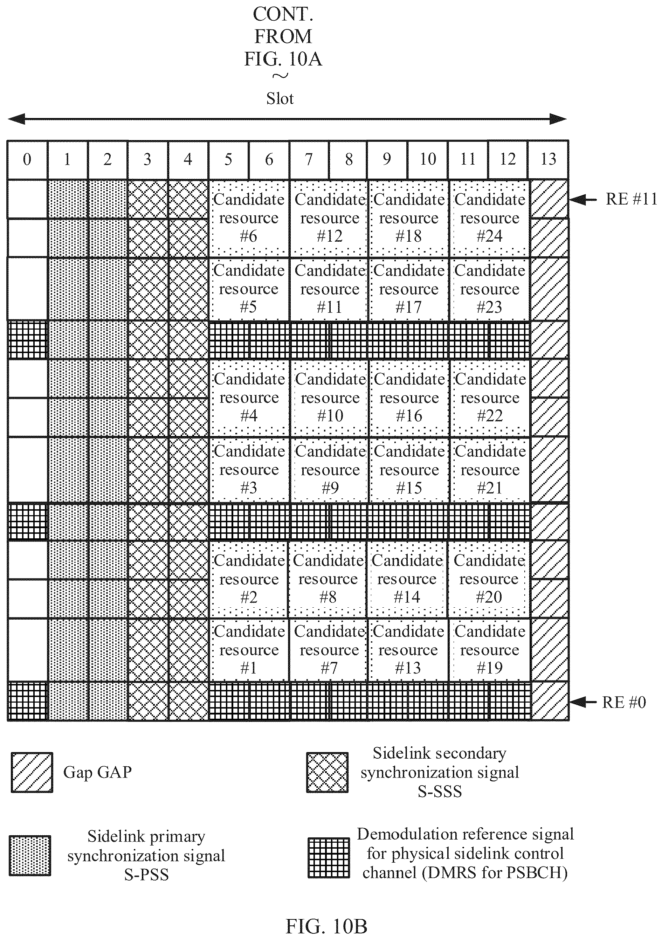

3. As shown in FIG. 10A and FIG. 10B, the first terminal device determines the first resource set based on the first pattern and the first sidelink resource. The first resource set includes REs #0 to #11 on symbols 0 to 12. Because resources in the first resource set overlap resources occupied by the S-PSS, the S-SSS, and the DMRS for PSBCH, the first terminal device excludes, from the first resource set, the resources that overlap the resources occupied by the S-PSS, the S-SSS, and the DMRS for PSBCH. For example, the S-PSS occupies the REs #0 to #11 on symbols 1 and 2. Therefore, the first terminal device excludes, from the first resource set, resources that overlap these resources. For another example, the S-SSS occupies the REs #0 to #11 on symbols 3 and 4. Therefore, the first terminal device excludes, from the first resource set, resources that overlap these resources. Because the first pattern includes two physically consecutive symbols in time domain, and includes at least one RE in frequency domain, and the first resource set includes the REs #0 to #11 on the symbols 0 to 12, some candidate resources in the candidate resource set each include two physically consecutive symbols in time domain, and include two physically consecutive REs in frequency domain, for example, as illustrated by a candidate resource #2 and a candidate resource #4 in FIG. 10A and FIG. 10B. Some other candidate resources in the candidate resource set each include two physically consecutive symbols in time domain, and include one RE in frequency domain, for example, as illustrated by a candidate resource #1 and a candidate resource #7 in FIG. 10A and FIG. 10B. Numbers of candidate resources in FIG. 10A and FIG. 10B are similar to those in FIG. 8A and FIG. 8B, and details are not described herein.

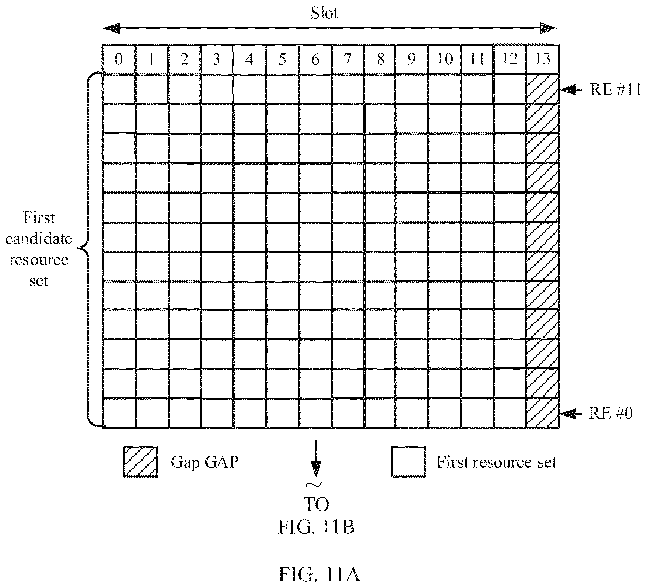

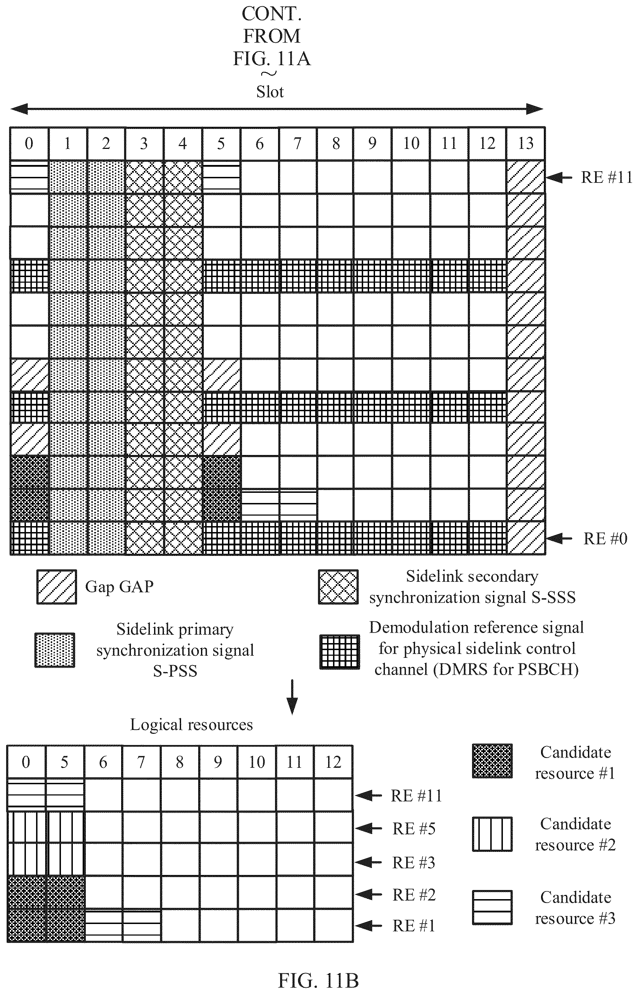

4. As shown in FIG. 11A and FIG. 11B, the first terminal device determines the first resource set based on the first pattern and the first sidelink resource. The first resource set includes REs #0 to #11 on symbols 0 to 12. Because resources in the first resource set overlap resources occupied by the S-PSS, the S-SSS, and the DMRS for PSBCH, the first terminal device excludes, from the first resource set, the resources that overlap the resources occupied by the S-PSS, the S-SSS, and the DMRS for PSBCH. For example, the S-PSS occupies the REs #0 to #11 on symbols 1 and 2. Therefore, the first terminal device excludes, from the first resource set, resources that overlap these resources. For another example, the S-SSS occupies the REs #0 to #11 on symbols 3 and 4. Therefore, the first terminal device excludes, from the first resource set, resources that overlap these resources. Because the first pattern includes two logically and/or physically consecutive symbols in time domain, and includes two logically and/or physically consecutive REs in frequency domain, and the first resource set includes the REs #0 to #11 on the symbols 0 to 12, candidate resources in the candidate resource set each include two logically and/or physically consecutive symbols in time domain, and include two logically and/or physically consecutive REs in frequency domain. As shown in FIG. 11A and FIG. 11B, a symbol 0 and a symbol 5 are logically consecutive, a symbol 6 and a symbol 7 are logically and physically consecutive, an RE #1 and an RE #2 are logically and physically consecutive, an RE #3 and an RE #5 are logically consecutive, and an RE #1 and an RE #11 are logically consecutive. A candidate resource 1 occupies the RE #1 on the symbol 0, the RE #2 on the symbol 0, the RE #1 on the symbol 5, and the RE #2 on the symbol 5. In other words, the candidate resource 1 includes two logically consecutive symbols in time domain, and includes two logically and physically consecutive REs in frequency domain. A candidate resource 2 occupies the RE #3 on the symbol 0, the RE #5 on the symbol 0, the RE #3 on the symbol 5, and the RE #5 on the symbol 5. In other words, the candidate resource 2 includes two logically consecutive symbols in time domain, and includes two logically consecutive REs in frequency domain. A candidate resource 3 occupies the RE #11 on the symbol 0, the RE #11 on the symbol 5, the RE #1 on the symbol 6, and the RE #1 on the symbol 7. In other words, the candidate resource 3 includes four logically consecutive symbols in time domain, and includes two logically consecutive REs in frequency domain. It should be understood that, when the candidate resources in the candidate resource set are not allowed to be logically inconsecutive, reference may be made to FIG. 1 1A and FIG. 11B. Numbers of candidate resources in FIG. 11A and FIG. 11B are similar to those in FIG. 8A and FIG. 8B, and details are not described herein.

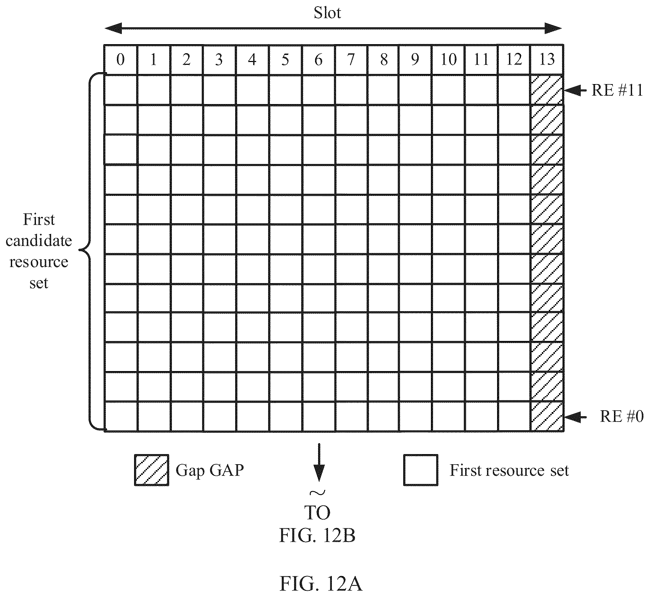

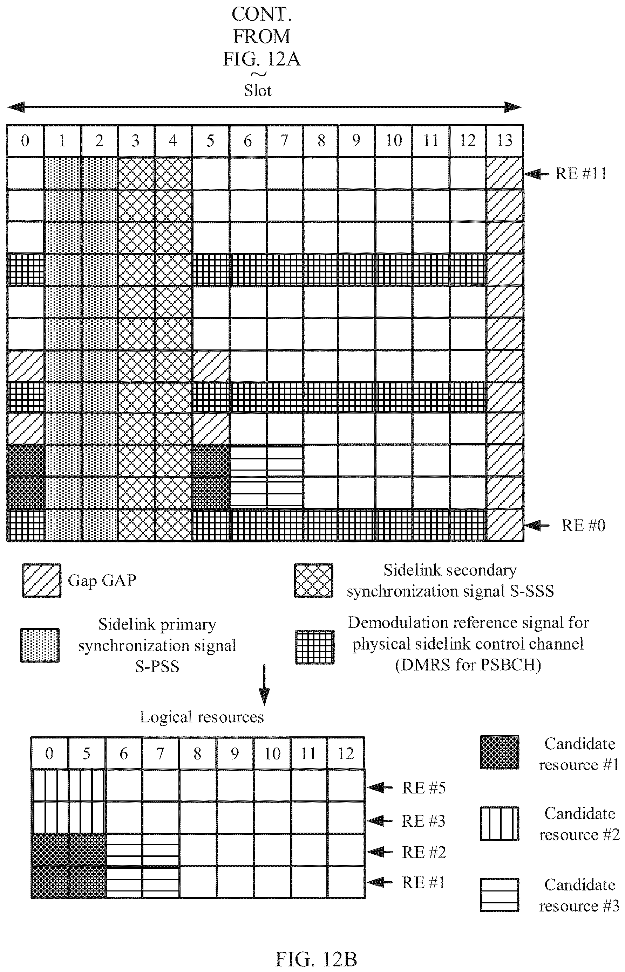

5. As shown in FIG. 12A and FIG. 12B, the first terminal device determines the first resource set based on the first pattern and the first sidelink resource. The first resource set includes REs #0 to #11 on symbols 0 to 12. Because resources in the first resource set overlap resources occupied by the S-PSS, the S-SSS, and the DMRS for PSBCH, the first terminal device excludes, from the first resource set, the resources that overlap the resources occupied by the S-PSS, the S-SSS, and the DMRS for PSBCH. For example, the S-PSS occupies the REs #0 to #11 on symbols 1 and 2. Therefore, the first terminal device excludes, from the first resource set, resources that overlap these resources. For another example, the S-SSS occupies the REs #0 to #11 on symbols 3 and 4. Therefore, the first terminal device excludes, from the first resource set, resources that overlap these resources. Because the first pattern includes two logically and/or physically consecutive symbols in time domain, and includes two logically and/or physically consecutive REs in frequency domain, and the first resource set includes the REs #0 to #11 on the symbols 0 to 12, candidate resources in the candidate resource set each include two logically and/or physically consecutive symbols in time domain, and include two logically and/or physically consecutive REs in frequency domain. As shown in FIG. 12A and FIG. 12B, a symbol 0 and a symbol 5 are logically consecutive, a symbol 6 and a symbol 7 are logically and physically consecutive, an RE #1 and an RE #2 are logically and physically consecutive, an RE #3 and an RE #5 are logically consecutive, and an RE #1 and an RE #11 are logically consecutive. A candidate resource 1 occupies the RE #1 on the symbol 0, the RE #2 on the symbol 0, the RE #1 on the symbol 5, and the RE #2 on the symbol 5. In other words, the candidate resource 1 includes two logically consecutive symbols in time domain, and includes two logically and physically consecutive REs in frequency domain. A candidate resource 2 occupies the RE #3 on the symbol 0, the RE #5 on the symbol 0, the RE #3 on the symbol 5, and the RE #5 on the symbol 5. In other words, the candidate resource 2 includes two logically consecutive symbols in time domain, and includes two logically consecutive REs in frequency domain. A candidate resource 3 occupies the RE #1 on the symbol 6, the RE #1 on the symbol 7, the RE #2 on the symbol 6, and the RE #2 on the symbol 7. In other words, the candidate resource 3 includes two logically and physically consecutive symbols in time domain, and includes two logically and physically consecutive REs in frequency domain. It should be understood that, when the candidate resources in the candidate resource set are allowed to be logically inconsecutive, reference may be made to FIG. 12A and FIG. 12B. Numbers of candidate resources in FIG. 12A and FIG. 12B are similar to those in FIG. 8A and FIG. 8B, and details are not described herein.

It should be noted that FIG. 8A to FIG. 12B merely show time-frequency positions of the second signal on one RB, and a time-frequency position of the second signal on another RB is similar to those in FIG. 8A to FIG. 12B. In addition, FIG. 7-1 to FIG. 12B are merely examples, and there are other implementations of the candidate resource included in the candidate resource set, which are not listed one by one herein.

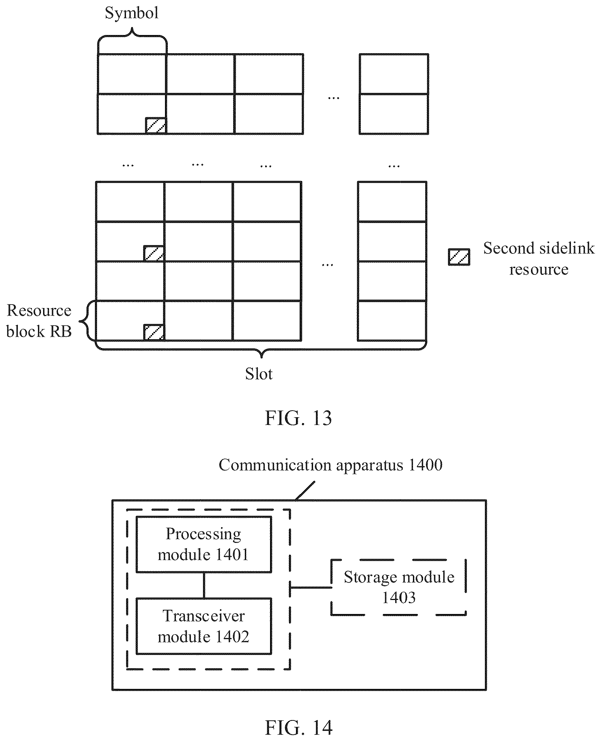

In a possible implementation, that the first terminal device determines the second sidelink resource based on the identification information of the first terminal device and the candidate resource set may be understood as follows: The first terminal device determines the second sidelink resource based on the identification information of the first terminal device and a total quantity of candidate resources in the candidate resource set. For example, index=pID mod (U), or index= (pID+delta) mod (U), where index is a number of the second sidelink resource, pID is the identification information of the first terminal device, U is the total quantity of candidate resources in the candidate resource set, and delta is a predefined or (pre)configured value. For example, delta may be 0. For example, the total quantity of candidate resources in the candidate resource set is 36, and the identification information of the first terminal device is 1. Therefore, the number of the second sidelink resource is 1. For another example, as shown in FIG. 13, it is assumed that the first pattern includes two consecutive symbols in time domain, and includes two consecutive REs in frequency domain, where K is 2. When the first sidelink resource is a sub-channel in a slot, the first terminal device may determine the second sidelink resource based on the identification information of the first terminal device and the total quantity of candidate resources in the candidate resource set. The second sidelink resource may include time-frequency resources that repeatedly appear at an interval of two RBs.

305: The second terminal device determines the second sidelink resource based on the identification information of the first terminal device.

Step 305 is similar to step 304, and details are not described herein again.

306: The second terminal device receives a third signal on the second sidelink resource, and measures the third signal to obtain a second measurement result, where the second signal and the third signal are a same signal or different signals.

When the second signal and the third signal are a same signal, it indicates that when the first terminal device sends the first signal on the first sidelink resource, no other terminal device broadcasts a wireless signal, and the second measurement result is almost 0. When the second signal and the third signal are different signals, it indicates that when the first terminal device sends the first signal on the first sidelink resource, another terminal device broadcasts a wireless signal. For example, a third terminal device sends (broadcasts) the third signal on the first sidelink resource. The third signal is similar to the first signal, and details are not described herein. Optionally, when both the first signal and the third signal are S-SSBs, an SSID included in the third signal is different from an SSID included in the first signal. In other words, an S-PSS included in the third signal is different from an S-PSS included in the first signal, and/or an S-SSS included in the third signal is different from an S-SSS included in the first signal.

307: The second terminal device performs beam training based on the first measurement result and the second measurement result.

Optionally, when the second signal and the third signal are different signals, the first measurement result further includes a measurement result obtained by the second terminal device by measuring a fourth signal on the first sidelink resource, and step 307 may include: The second terminal device determines a difference between the first measurement result and the second measurement result. The second terminal device performs beam training based on the difference between the first measurement result and the second measurement result. In this way, it can be ensured that a result of beam training performed by the second terminal device based on the first measurement result and the second measurement result is accurate.

Optionally, the fourth signal may be a signal broadcast by the third terminal device. The fourth signal may include an identifier of the third terminal device. The fourth signal is similar to the first signal, and details are not described herein.

It should be noted that, in essence, step 301 to step 307 need to be performed for a plurality of times during beam training in this application, to obtain final results of a plurality of times of measurement (for example, the difference between the first measurement result and the second measurement result in step 307 is a final result of one time of measurement), so that a largest measurement result may be determined in the final results of the plurality of times of measurement, and a beam corresponding to the measurement result is used as an optimal beam.

In the foregoing embodiment, accuracy of a beam training result can be improved.

In a possible implementation, a total quantity of terminal devices is less than or equal to the total quantity of candidate resources in the candidate resource set, and resources that are used to carry the second signal and that are on terminal devices do not overlap. For example, the identification information of the first terminal device is different from identification information of the second terminal device, a number of a resource that is used to carry the second signal and that is on the first terminal device is the identification information of the first terminal device mod the total quantity of candidate resources in the candidate resource set, and a number of a resource that is used to carry the second signal and that is on the second terminal device is the identification information of the second terminal device mod the total quantity of candidate resources in the candidate resource set. The resource that is used to carry the second signal and that is on the first terminal device does not overlap the resource that is used to carry the second signal and that is on the second terminal device. For example, with reference to FIG. 7-1 and FIG. 7-2, the resource that is used to carry the second signal and that is on the first terminal device may be the candidate resource #1, and the resource that is used to carry the second signal and that is on the second terminal device may be the candidate resource #2. In another possible implementation, if a total quantity of terminal devices is greater than the total quantity of candidate resources in the candidate resource set, resources that are used to carry the second signal and that are on some terminal devices may overlap. For example, SSIDs of different terminal devices in this application may be the same or different. It may also be understood that second sidelink resources corresponding to different terminal devices are the same or different. For example, SSIDs of the first terminal device and the third terminal device are the same, and the second sidelink resource corresponding to the first terminal device may be the same as a second sidelink resource corresponding to the third terminal device.

The foregoing mainly describes the solutions provided in this application from a perspective of interaction between devices. It may be understood that, to implement the foregoing functions, each device includes a corresponding hardware structure and/or software module for performing each function. A person skilled in the art should easily be aware that, in combination with units and algorithm steps of the examples described in the embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the terminal device (for example, the first terminal device or the second terminal device) may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division during actual implementation.

FIG. 14 is a diagram of a structure of a communication apparatus according to an embodiment of this application. The communication apparatus 1400 may be applied to the method shown in the embodiment of FIG. 3. As shown in FIG. 14, the communication apparatus 1400 includes a processing module 1401 and a transceiver module 1402. The processing module 1401 may be one or more processors, and the transceiver module 1402 may be a transceiver or a communication interface. The communication apparatus may be configured to implement the terminal device (for example, the first terminal device or the second terminal device) in any one of the foregoing method embodiments, or configured to implement a function of a network element in any one of the foregoing method embodiments. The network element or network function may be a network element in a hardware device, a software function running on dedicated hardware, or a virtualized function instantiated on a platform (for example, a cloud platform). Optionally, the communication apparatus 1400 may further include a storage module 1403, configured to store program code and data of the communication apparatus 1400.

In an example, when the communication apparatus serves as a terminal device (for example, a first terminal device or a second terminal device) or a chip used in the terminal device (for example, the first terminal device or the second terminal device), the communication apparatus performs the steps performed by the terminal device (for example, the first terminal device or the second terminal device) in the foregoing method embodiment. The transceiver module 1402 is configured to specifically perform a sending and/or receiving action performed by the terminal device (for example, the first terminal device or the second terminal device) in the embodiment of FIG. 3, for example, support the terminal device (for example, the first terminal device or the second terminal device) in performing another process of the technology described in this specification. The processing module 1401 may be configured to support the communication apparatus 1400 in performing a processing action in the foregoing method embodiment, for example, support the terminal device (for example, the first terminal device or the second terminal device) in performing another process of the technology described in this specification.

For example, the processing module 1401 is configured to determine a first sidelink resource. The transceiver module 1402 is configured to send a first signal on the first sidelink resource, where the first signal is used to determine identification information of a first terminal device. The processing module 1401 is further configured to determine a second sidelink resource based on the identification information of the first terminal device. The second sidelink resource is located in the first sidelink resource, the second sidelink resource is used to carry a second signal, the second signal is used for interference measurement, and power of the second signal is zero.

Optionally, when determining the second sidelink resource based on the identification information of the first terminal device, the processing module 1401 is configured to: determine a first pattern, where the first pattern is used to determine a resource position of the second signal; determine a candidate resource set based on the first pattern and the first sidelink resource, where a candidate resource in the candidate resource set is used to carry the second signal; and determine the second sidelink resource based on the identification information of the first terminal device and the candidate resource set.

For another example, the processing module 1401 is configured to determine a first sidelink resource. The transceiver module 1402 is configured to: receive a first signal on the first sidelink resource, and measure the first signal to obtain a first measurement result, where the first signal is used to determine identification information of a first terminal device. The processing module 1401 is further configured to determine a second sidelink resource based on the identification information of the first terminal device, where the second sidelink resource is located in the first sidelink resource, the second sidelink resource is used to carry a second signal, the second signal is used for interference measurement, and power of the second signal is zero. The transceiver module 1402 is further configured to receive a third signal on the second sidelink resource. The processing module 1401 is further configured to measure the third signal to obtain a second measurement result, where the second signal and the third signal are a same signal or different signals. The processing module 1401 is further configured to perform beam training based on the first measurement result and the second measurement result.

Optionally, when determining the second sidelink resource based on the identification information of the first terminal device, the processing module 1401 is configured to: determine a first pattern, where the first pattern is used to determine a resource position of the second signal; determine a candidate resource set based on the first pattern and the first sidelink resource, where a candidate resource in the candidate resource set is used to carry the second signal; and determine the second sidelink resource based on the identification information of the first terminal device and the candidate resource set.

Optionally, the second signal and the third signal are different signals, and the first measurement result further includes a measurement result obtained by a second terminal device by measuring a fourth signal on the first sidelink resource. When performing beam training based on the first measurement result and the second measurement result, the processing module 1401 is configured to: determine a difference between the first measurement result and the second measurement result; and perform beam training based on the difference between the first measurement result and the second measurement result.

In a possible implementation, when the terminal device (for example, the first terminal device or the second terminal device) is a chip, the transceiver module 1402 may be a communication interface, a pin, a circuit, or the like. The communication interface may be configured to input to-be-processed data to a processor, and may output a processing result of the processor to the outside. During specific implementation, the communication interface may be a general-purpose input/output (general-purpose input/output, GPIO) interface, and may be connected to a plurality of peripheral devices (for example, a display (LCD), a camera (camera), a radio frequency (radio frequency, RF) module, and an antenna). The communication interface is connected to the processor through a bus.

The processing module 1401 may be a processor. The processor may execute computer-executable instructions stored in the storage module, so that the chip performs the method in the embodiment of FIG. 3. Further, the processor may include a controller, an arithmetic logic unit, and a register. For example, the controller is mainly responsible for decoding instructions, and sending a control signal for an operation corresponding to the instructions. The arithmetic logic unit is mainly responsible for performing a fixed-point or floating-point arithmetic operation, a shift operation, a logic operation, and the like, and may also perform an address operation and address translation. The register is mainly responsible for saving register operands, intermediate operation results, and the like that are temporarily stored during instruction execution. During specific implementation, a hardware architecture of the processor may be an ASIC architecture, a microprocessor without interlocked piped stages (microprocessor without interlocked piped stages, MIPS) architecture, an advanced reduced instruction set computing machines (advanced RISC machines, ARM) architecture, a second processor (network processor, NP) architecture, or the like. The processor may be a single-core processor or a multi-core processor. The storage module may be a storage module inside the chip, for example, a register or a cache. Alternatively, the storage module may be a storage module outside the chip, for example, a ROM, another type of static storage device that can store static information and instructions, or a RAM.

It should be noted that functions separately corresponding to the processor and the interface may be implemented by using a hardware design, may be implemented by using a software design, or may be implemented by using a combination of software and hardware. This is not limited herein.

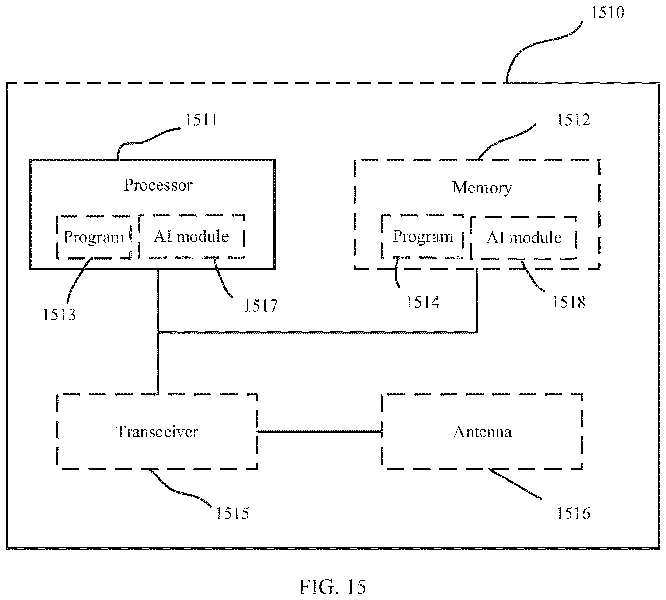

FIG. 15 is a diagram of a structure of another communication apparatus according to an embodiment of this application. It may be understood that the communication apparatus 1510 includes means in necessary forms, such as modules, units, elements, circuits, or interfaces, which are appropriately configured together to implement the solution. The communication apparatus 1510 may be the foregoing terminal device (for example, the first terminal device) or the network device, or may be a component (for example, a chip) in these devices, configured to implement the method described in the foregoing method embodiment. The communication apparatus 1510 includes one or more processors 1511. The processor 1511 may be a general-purpose processor, a dedicated processor, or the like. For example, the processor may be a baseband processor or a central processing unit. The baseband processor may be configured to process a communication protocol and communication data. The central processing unit may be configured to: control the communication apparatus (for example, the terminal device (for example, the first terminal device), the network device, or the chip), execute a software program, and process data of the software program.

Optionally, in a design, the processor 1511 may include a program 1513 (which may also be sometimes referred to as code or instructions). The program 1513 may be run on the processor 1511, to enable the communication apparatus 1510 to perform the method described in the foregoing embodiment. In another possible design, the communication apparatus 1510 includes a circuit (not shown in FIG. 15), and the circuit is configured to implement functions of the terminal device (for example, the first terminal device), the network device, or the like in the foregoing embodiment. Optionally, the communication apparatus 1510 may include one or more memories 1512, and a program 1514 (which may also be sometimes referred to as code or instructions) is stored in the memory 1512. The program 1514 may be run on the processor 1511, to enable the communication apparatus 1510 to perform the method described in the foregoing method embodiment.

Optionally, the processor 1511 and/or the memory 1512 may include an AI module 1517 and an AI module 1518. The AI module is configured to implement an AI-related function. The AI module may be implemented by using software, hardware, or a combination of software and hardware. For example, the AI module may include an RIC module. For example, the AI module may be a near-real-time RIC or a non-real-time RIC. Optionally, the processor 1511 and/or the memory 1512 may further store data. The processor and the memory may be separately disposed, or may be integrated together.

Optionally, the communication apparatus 1510 may further include a transceiver 1515 and/or an antenna 1516. The processor 1511 may also be sometimes referred to as a processing unit, and controls the communication apparatus (for example, the terminal device (for example, the first terminal device) or the network device). The transceiver 1515 may also be sometimes referred to as a transceiver unit, a transceiver machine, a transceiver circuit, a transceiver, or the like, and is configured to implement receiving and sending functions of the communication apparatus through the antenna 1516.

An embodiment of this application further provides a communication apparatus. The communication apparatus includes at least one processor and a memory. The memory is configured to store a computer program or instructions. The at least one processor is configured to execute the computer program or the instructions in the memory, to perform the method in any one of the implementations in the embodiment of FIG. 3.

An embodiment of this application further provides a computer-readable storage medium. The computer-readable storage medium stores computer instructions. When the computer instructions are executed, a computer is enabled to perform the method in any one of the implementations in the embodiment of FIG. 3.

An embodiment of this application further provides a computer program product. The computer program product includes computer program code. When the computer program code is run by a computer, the computer is enabled to perform the method in any one of the implementations in the embodiment of FIG. 3.

An embodiment of this application further provides a chip. The chip includes at least one processor and an interface. The processor is configured to read and execute instructions stored in a memory. When the instructions are run, the chip is enabled to perform the method in any one of the implementations in the embodiment of FIG. 3.

The units described as separate parts may or may not be physically separate, and parts displayed as units may or may not be physical units, that is, may be located at one position, or may be distributed on a plurality of network units. Some or all of the units may be selected based on an actual requirement, to achieve the objectives of the solutions in embodiments of this application. In addition, network element units in embodiments of this application may be integrated into one processing unit, each of the units may exist alone physically, or two or more units may be integrated into one unit. The integrated unit may be implemented in a form of hardware, or may be implemented in a form of a software network element unit.

When the integrated unit is implemented in the form of a software network element unit and sold or used as an independent product, the integrated unit may be stored in a computer-readable storage medium. Based on such an understanding, an essentially contributing part in the technical solutions of this application or all or a part of the technical solutions may be embodied in a form of a software product. The computer software product is stored in a storage medium and includes several instructions for instructing a computer device (which may be a personal computer, a terminal device, a cloud server, a network device, or the like) to perform all or some of the steps of the method in embodiments of this application. The storage medium includes any medium that can store program code, such as a USB flash drive, a removable hard disk, a read-only memory (Read-Only Memory, ROM), a random access memory (Random Access Memory, RAM), a magnetic disk, or an optical disc. The foregoing descriptions are merely specific implementations of this application, but the protection scope of this application is not limited thereto. Any equivalent modification or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   determining, by a first terminal device, a first sidelink resource;
   sending, by the first terminal device, a first signal on the first sidelink resource, wherein the first signal is used to determine identification information of the first terminal device; and
   determining, by the first terminal device, a second sidelink resource based on the identification information of the first terminal device, wherein
   the second sidelink resource is located in the first sidelink resource, the second sidelink resource is used to carry a second signal, the second signal is used for interference measurement, and power of the second signal is zero.

2. The method according to claim 1, wherein determining, by the first terminal device, the second sidelink resource based on the identification information of the first terminal device comprises:

   determining, by the first terminal device, a first pattern, wherein the first pattern is used to determine a resource position of the second signal;
   determining, by the first terminal device, a candidate resource set based on the first pattern and the first sidelink resource, wherein a candidate resource in the candidate resource set is used to carry the second signal; and
   determining, by the first terminal device, the second sidelink resource based on the identification information of the first terminal device and the candidate resource set.

3. The method according to claim 1 or 2, wherein the first sidelink resource comprises a resource occupied by a sidelink synchronization signal block, and the candidate resource in the candidate resource set does not overlap a resource occupied by one or more of a sidelink primary synchronization signal, a sidelink secondary synchronization signal, and a demodulation reference signal for physical sidelink broadcast channel PSBCH that are comprised in the sidelink synchronization signal block.

4. The method according to claim 1 or 2, wherein the first sidelink resource comprises a resource occupied by a physical sidelink shared channel, and the candidate resource in the candidate resource set does not overlap a resource occupied by one or more of a channel state information reference signal and a demodulation reference signal for physical sidelink shared channel.

5. The method according to any one of claims 2 to 4, wherein candidate resources in the candidate resource set are consecutively numbered first in ascending order of indexes of frequency domain units and then in ascending order of indexes of time units.

6. The method according to claim 2, wherein the first pattern comprises at least Q time units in time domain and at least N frequency domain units in frequency domain, Q is an integer greater than or equal to 1 and less than or equal to 14, and N is an integer greater than or equal to 1 and less than or equal to 12.

7. A communication method, comprising:

   determining, by a second terminal device, a first sidelink resource;
   receiving, by the second terminal device, a first signal on the first sidelink resource, and measuring the first signal to obtain a first measurement result, wherein the first signal is used to determine identification information of a first terminal device;

determining, by the second terminal device, a second sidelink resource based on the identification information of the first terminal device, wherein the second sidelink resource is located in the first sidelink resource, the second sidelink resource is used to carry a second signal, the second signal is used for interference measurement, and power of the second signal is zero;

receiving, by the second terminal device, a third signal on the second sidelink resource, and measuring the third signal to obtain a second measurement result, wherein the second signal and the third signal are a same signal or different signals; and

performing, by the second terminal device, beam training based on the first measurement result and the second measurement result.

8. The method according to claim 7, wherein the identification information of the first terminal device is different from identification information of the second terminal device, and a resource that is used to carry the second signal and that is on the first terminal device does not overlap a resource that is used to carry the second signal and that is on the second terminal device.

9. The method according to claim 7 or 8, wherein determining, by the second terminal device, the second sidelink resource based on the identification information of the first terminal device comprises:

determining, by the second terminal device, a first pattern, wherein the first pattern is used to determine a resource position of the second signal;

determining, by the second terminal device, a candidate resource set based on the first pattern and the first sidelink resource, wherein a candidate resource in the candidate resource set is used to carry the second signal; and

determining, by the second terminal device, the second sidelink resource based on the identification information of the first terminal device and the candidate resource set.

10. The method according to any one of claims 7 to 9, wherein the first sidelink resource comprises a resource occupied by a sidelink synchronization signal block, and the candidate resource in the candidate resource set does not overlap a resource occupied by one or more of a sidelink primary synchronization signal, a sidelink secondary synchronization signal, and a demodulation reference signal for physical sidelink broadcast channel PSBCH that are comprised in the sidelink synchronization signal block.

11. The method according to any one of claims 7 to 9, wherein the first sidelink resource comprises a resource occupied by a physical sidelink shared channel, and the candidate resource in the candidate resource set does not overlap a resource occupied by one or more of a channel state information reference signal and a demodulation reference signal for physical sidelink shared channel.

12. The method according to any one of claims 9 to 11, wherein candidate resources in the candidate resource set are consecutively numbered first in ascending order of indexes of frequency domain units and then in ascending order of indexes of time units.

13. The method according to claim 9, wherein the first pattern comprises at least Q time units in time domain and at least N frequency domain units in frequency domain, Q is an integer greater than or equal to 1 and less than or equal to 14, and N is an integer greater than or equal to 1 and less than or equal to 12.

14. The method according to any one of claims 7 to 13, wherein the second signal and the third signal are different signals, the first measurement result further comprises a measurement result obtained by the second terminal device by measuring a fourth signal on the first sidelink resource, and performing, by the second terminal device, beam training based on the first measurement result and the second measurement result comprises: determining, by the second terminal device, a difference between the first measurement result and the second measurement result; and performing, by the second terminal device, beam training based on the difference between the first measurement result and the second measurement result.

15. A communication apparatus, comprising a unit or module configured to implement the method according to any one of claims 1 to 14.

16. A communication apparatus, wherein the communication apparatus comprises at least one processor and a memory, the memory is configured to store a computer program or instructions, and the at least one processor is configured to execute the computer program or the instructions in the memory to perform the method according to any one of claims 1 to 14.

17. A communication system, wherein the communication system comprises a first terminal device and a second terminal device, the first terminal device is configured to perform the method according to any one of claims 1 to 6, and the second terminal device is configured to perform the method according to any one of claims 7 to 14.

18. A computer-readable storage medium, wherein the computer-readable storage medium stores computer instructions; and when the computer instructions are executed, the computer is enabled to perform the method according to any one of claims 1 to 14.

19. A computer program product, wherein the computer program product comprises computer program code; and when the computer program code is run by a computer, the computer is enabled to perform the method according to any one of claims 1 to 14.

20. A chip, wherein the chip comprises at least one processor and an interface, and the processor is configured to read and execute instructions stored in a memory; and when the instructions are run, the chip is enabled to perform the method according to any one of claims 1 to 14.

FIG. 1

FIG. 2-1

FIG. 2-2

Network device A

Network device A

Terminal
device A

Terminal
device B

FIG. 2-3

Network device

Terminal
device A

Terminal
device B

FIG. 2-4

First terminal device

Second terminal device

301: Determine a first sidelink resource

302: Determine the first sidelink resource

303

Receive a first signal on the first sidelink resource

Measure the first signal to obtain a first measurement result, where the first signal is used to determine identification information of the first terminal device

304: Determine a second sidelink resource based on the identification information of the first terminal device, where the second sidelink resource is located in the first sidelink resource, the second sidelink resource is used to carry a second signal, the second signal is used for interference measurement, and power of the second signal is zero

305: Determine the second sidelink resource based on the identification information of the first terminal device

306: Receive a third signal on the second sidelink resource, and measures the third signal to obtain a second measurement result

307: Perform beam training based on the first measurement result and the second measurement result

FIG. 3

| PSBCH | S-PSS | S-PSS | S-SSS | S-SSS | PSBCH | PSBCH | PSBCH | PSBCH | PSBCH | PSBCH | PSBCH | PSBCH | GAP |
|---|---|---|---|---|---|---|---|---|---|---|---|---|---|
| 0 | 1 | 2 | 3 | 4 | 5 | 6 | 7 | 8 | 9 | 10 | 11 | 12 | 13 |

Symbol

4-1

11 RBs | 127 REs | PSBCH | S-PSS | S-PSS | S-SSS | S-SSS | PSBCH | ... | PSBCH | PSBCH

3 REs

2 REs

4-2

PSBCH: physical sidelink broadcast channel
S-PSS: sidelink primary synchronization signal
S-SSS: sidelink secondary synchronization signal
RB: resource block
RE: resource element

FIG. 4

EP 4 694 506 A1

EP 4 694 506 A1

Symbol

| 0 | 1 | 2 | 3 | 4 | 5 | 6 | 7 | 8 | 9 | 10 | 11 | 12 | 13 |
|---|---|---|---|---|---|---|---|---|---|----|----|----|----|

| AGC | PSSCH | PSSCH | DMRS | PSSCH | PSSCH | PSSCH | PSSCH | PSSCH | PSSCH | DMRS | PSSCH | PSSCH | GAP |
|     | PSCCH (spanning) | | | | | | | | | | | | |

← 1 slot →

AGC: automatic gain control
PSCCH: physical sidelink control channel
PSSCH: physical sidelink shared channel
GUARD: guard period

FIG. 5

FIG. 6

FIG. 7-1

Slot

| 0 | 1 | 2 | 3 | 4 | 5 | 6 | 7 | 8 | 9 | 10 | 11 | 12 | 13 |

11 resource blocks RBs

Candidate resource #66

Candidate resource #131

Candidate resource #396

RE #131

Candidate resource #64

Candidate resource #130

Candidate resource #395

...    ...    ...

Candidate resource #2

Candidate resource #68

Candidate resource #334

Candidate resource #1

Candidate resource #67

Candidate resource #333

Resource element RE #0

Gap GAP

EP 4 694 506 A1

29

FIG. 7-2

Slot

| 0 | 1 | 2 | 3 | 4 | 5 | 6 | 7 | 8 | 9 | 10 | 11 | 12 | 13 |

◀— RE #11

◀— RE #0

▨ Gap GAP

↓

~
TO
FIG. 8B

☐ Resource in a first resource set

FIG. 8A

CONT.
FROM
FIG. 8A

FIG. 8B

Legend:
- Gap GAP
- Sidelink primary synchronization signal S-PSS
- Candidate resource in a candidate resource set
- Sidelink secondary synchronization signal S-SSS
- Demodulation reference signal for physical sidelink control channel (DMRS for PSBCH)

FIG. 9A

CONT.
FROM
FIG. 9A
~
Slot

FIG. 9B

Slot

First
candidate
resource
set

RE #11

RE #0

Gap GAP

TO
FIG. 10B

FIG. 10A

First resource set

CONT.
FROM
FIG. 10A
~

Slot

| 0 | 1 | 2 | 3 | 4 | 5 | 6 | 7 | 8 | 9 | 10 | 11 | 12 | 13 |
|---|---|---|---|---|---|---|---|---|---|----|----|----|----|

Candidate resource #6 — Candidate resource #12 — Candidate resource #18 — Candidate resource #24    ← RE #11

Candidate resource #5 — Candidate resource #11 — Candidate resource #17 — Candidate resource #23

Candidate resource #4 — Candidate resource #10 — Candidate resource #16 — Candidate resource #22

Candidate resource #3 — Candidate resource #9 — Candidate resource #15 — Candidate resource #21

Candidate resource #2 — Candidate resource #8 — Candidate resource #14 — Candidate resource #20

Candidate resource #1 — Candidate resource #7 — Candidate resource #13 — Candidate resource #19    ← RE #0

Gap GAP

Sidelink secondary synchronization signal S-SSS

Sidelink primary synchronization signal S-PSS

Demodulation reference signal for physical sidelink control channel (DMRS for PSBCH)

FIG. 10B

FIG. 11A

CONT.
FROM
FIG. 11A

Slot

← RE #11

← RE #0

Gap GAP

Sidelink secondary
synchronization signal S-SSS

Sidelink primary
synchronization signal
S-PSS

Demodulation reference signal
for physical sidelink control
channel (DMRS for PSBCH)

Logical resources

← RE #11
← RE #5
← RE #3
← RE #2
← RE #1

Candidate
resource #1

Candidate
resource #2

Candidate
resource #3

FIG. 11B

FIG. 12A

CONT.
FROM
FIG. 12A
~
Slot

| 0 | 1 | 2 | 3 | 4 | 5 | 6 | 7 | 8 | 9 | 10 | 11 | 12 | 13 |
|---|---|---|---|---|---|---|---|---|---|----|----|----|----|

← RE #11

← RE #0

| ▨ | Gap GAP | | ▧ | Sidelink secondary synchronization signal S-SSS |

| ▦ | Sidelink primary synchronization signal S-PSS | | ▥ | Demodulation reference signal for physical sidelink control channel (DMRS for PSBCH) |

Logical resources

| 0 | 5 | 6 | 7 | 8 | 9 | 10 | 11 | 12 |
|---|---|---|---|---|---|----|----|----|

← RE #5
← RE #3
← RE #2
← RE #1

| ▓ | Candidate resource #1 |
| ⦚ | Candidate resource #2 |
| ☰ | Candidate resource #3 |

FIG. 12B

40

Symbol

Resource
block RB

Slot

Second sidelink
resource

FIG. 13

Communication apparatus 1400

Processing
module 1401

Storage module
1403

Transceiver
module 1402

FIG. 14

1510

1511

Processor

Program | AI module

1513

1517

1512

Memory

Program | AI module

1514

1518

Transceiver

Antenna

1515

1516

FIG. 15

# EP 4 694 506 A1

## INTERNATIONAL SEARCH REPORT

| | International application No. |
|---|---|
| | **PCT/CN2024/089080** |

### A. CLASSIFICATION OF SUBJECT MATTER

H04W 72/25(2023.01)i

According to International Patent Classification (IPC) or to both national classification and IPC

### B. FIELDS SEARCHED

Minimum documentation searched (classification system followed by classification symbols)

IPC: H04W, H04L, H04B, H04Q 7/-

Documentation searched other than minimum documentation to the extent that such documents are included in the fields searched

Electronic data base consulted during the international search (name of data base and, where practicable, search terms used)

CNABS, CNTXT, CNKI, VEN, WOTXT, USTXT, EPTXT, 3GPP: 侧行链路, 侧链路, 侧行, 侧边带, 副链路, 副边带, 同步信号, 源层, 标识, 资源, 信号, 侧行链路同步信号块, 信道状态信息参考信号, 干扰, 测量, 波束, 训练, sidelink, SL, synchronization signal identifier, SSID, source, layer, identification, resource, signal, sidelink synchronization signal block, S-SSB, channel state information reference signal, CSI-RS, interference, measurement, beam training

### C. DOCUMENTS CONSIDERED TO BE RELEVANT

| Category* | Citation of document, with indication, where appropriate, of the relevant passages | Relevant to claim No. |
|---|---|---|
| A | WO 2021080868 A1 (QUALCOMM INC.) 29 April 2021 (2021-04-29) description, paragraphs [0088]-[0105], and figures 2-4 | 1-20 |
| A | CN 115580920 A (HUAWEI TECHNOLOGIES CO., LTD.) 06 January 2023 (2023-01-06) description, paragraphs [0186]-[0259], and figures 4-16 | 1-20 |
| A | CN 111294773 A (HUAWEI TECHNOLOGIES CO., LTD.) 16 June 2020 (2020-06-16) entire document | 1-20 |
| A | CN 112997551 A (GUANGDONG OPPO MOBILE COMMUNICATIONS CO., LTD.) 18 June 2021 (2021-06-18) entire document | 1-20 |
| A | CN 114982163 A (QUALCOMM INC.) 30 August 2022 (2022-08-30) entire document | 1-20 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **26 July 2024** | **30 July 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

# EP 4 694 506 A1

| INTERNATIONAL SEARCH REPORT | International application No. |
| Information on patent family members | PCT/CN2024/089080 |

| Patent document cited in search report | | | Publication date (day/month/year) | Patent family member(s) | | | Publication date (day/month/year) |
|---|---|---|---|---|---|---|---|
| WO | 2021080868 | A1 | 29 April 2021 | TW | 202123624 | A | 16 June 2021 |
| | | | | US | 2021127381 | A1 | 29 April 2021 |
| | | | | US | 11985647 | B2 | 14 May 2024 |
| CN | 115580920 | A | 06 January 2023 | None | | | |
| CN | 111294773 | A | 16 June 2020 | US | 2021298039 | A1 | 23 September 2021 |
| | | | | US | 12035344 | B2 | 09 July 2024 |
| | | | | WO | 2020119446 | A1 | 18 June 2020 |
| | | | | EP | 3883275 | A1 | 22 September 2021 |
| | | | | EP | 3883275 | A4 | 05 January 2022 |
| CN | 112997551 | A | 18 June 2021 | None | | | |
| CN | 114982163 | A | 30 August 2022 | WO | 2021154884 | A1 | 05 August 2021 |
| | | | | EP | 4097884 | A1 | 07 December 2022 |
| | | | | US | 2023047695 | A1 | 16 February 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310544138